(19) **Europäisches Patentamt / European Patent Office / Office européen des brevets**

(11) **EP 4 753 334 A1**

(12) **EUROPEAN PATENT APPLICATION**
published in accordance with Art. 153(4) EPC

(43) Date of publication:
03.06.2026 Bulletin 2026/23

(21) Application number: 23946232.8

(22) Date of filing: 26.07.2023

(51) International Patent Classification (IPC):
*H04W 48/08* (2009.01)

(52) Cooperative Patent Classification (CPC):
H04W 48/08

(86) International application number:
PCT/CN2023/109431

(87) International publication number:
WO 2025/020145 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Xiaomi Mobile Software Co.,
Ltd.
Beijing 100085 (CN)

(72) Inventor: JIANG, Xiaowei
Beijing 100085 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **ACCESS METHOD AND APPARATUS, COMMUNICATION DEVICE, COMMUNICATION SYSTEM, AND STORAGE MEDIUM**

(57) Embodiments of the present disclosure provide an access method and apparatus, a communication device, a communication system, and a storage medium. The access method comprises: a terminal receives first information of a second cell from a first cell, wherein the second cell has overlapping coverage with the first cell, or the coverage of the second cell is adjacent to the coverage of the first cell; the first information is used for the terminal to access the second cell; and the second cell is a cell in a dormant state, or the second cell does not send at least one of the following content: a synchronization signal/PBCH block (SSB), a system information block (SIB), and a paging message.

FIG. 2

## Description

### TECHNICAL FIELD

The disclosure relates to the field of communication technology, specifically to an access method, an apparatus, a communication device, a communication system, and a storage medium.

### BACKGROUND

With the development of communication technology, the concept of network energy saving (NES) is proposed. Green environmental protection can be achieved via the NES. However, how to ensure the wireless communication quality of devices while realizing the NES is also a problem to be addressed.

### SUMMARY

With the development of technologies, a successful access of a device against a backdrop of the network energy saving (NES) is proposed.

Embodiments of the disclosure provide an access method, an apparatus, a communication device, and a storage medium.

According to a first aspect of the embodiments of the disclosure, an access method is provided, and the access method includes:

receiving, by a terminal, first information of a second cell from a first cell, wherein a coverage of the second cell overlaps with a coverage of the first cell, or a coverage of the second cell is adjacent to a coverage of the first cell; the first information is configured for the terminal to access the second cell; and the second cell is in a dormant state, or the second cell does not transmit at least one of:

a synchronization signal block (SSB);
a system information block (SIB); or
a paging message.

According to a second aspect of the embodiments of the disclosure, an access method is provided, and the access method includes:

sending first information by an access network device of a first cell or a second cell, in which the first information is configured for a terminal to access the second cell; a coverage of the second cell overlaps with a coverage of the first cell, or a coverage of the second cell is adjacent to a coverage of the first cell; and the second cell is in a dormant state, or the second cell does not transmit at least one of:

an SSB;
an SIB; or
a paging message.

According to a third aspect of the embodiments of the disclosure, a terminal is provided, including:

a receiving module configured to receive first information of a second cell from a first cell, in which a coverage of the second cell overlaps with a coverage of the first cell, or a coverage of the second cell is adjacent to a coverage of the first cell; the first information is configured for the terminal to access the second cell; and the second cell does not transmit at least one of:

an SSB;
an SIB; or
a paging message.

According to a fourth aspect of the embodiments of the disclosure, an access network device is provided, including:

a sending module configured to transmit first information in a first cell or a second cell, in which the first information is configured for a terminal to access the second cell; and the second cell is in a dormant state, or the second cell does not transmit at least one of:

an SSB;

an SIB; or

a paging message,

in which a coverage of the second cell overlaps with a coverage of the first cell, or a coverage of the second cell is adjacent to a coverage of the first cell.

According to a fifth aspect of the embodiments of the disclosure, an access method is provided, including:

a terminal performing the access method in any technical solution of the first aspect; and

an access network device performing the access method in any technical solution of the second aspect.

According to a sixth aspect of the embodiments of the disclosure, a communication system is provided, including a terminal and access network device. The terminal is configured to perform the access method in any technical solution of the first aspect, and the access network device is configured to perform the access method in any technical solution of the second aspect.

According to a seventh aspect of the embodiments of the disclosure, a communication device is provided, including:

one or more processors,

in which the one or more processors are configured to invoke instructions to cause the communication device to execute the access method according to the first aspect and/or the second aspect.

According to an eighth aspect of the embodiments of the disclosure, a storage medium is provided, in which the storage medium stores instructions. When the instructions are executed on a communication device, the communication device is caused to execute the access method according to the first aspect and/or the second aspect.

In the technical solutions provided by the embodiments of the disclosure, the first information is sent by the first cell and is able to assist the terminal in accessing the second cell that does not transmit the SSB, the SIB and/or the paging message. On the one hand, this achieves energy conservation of the second cell. On the other hand, it enables the terminal to successfully access the second cell with an assistance of the first cell, thereby ensuring an access success rate of the second cell.

It should be understood that the foregoing general description and the following detailed description are merely exemplary and explanatory, and shall not limit the embodiments of the disclosure.

BRIEF DESCRIPTION OF THE DRAWINGS

The accompanying drawings are incorporated in and constitute a part of this specification, which illustrate embodiments consistent with the disclosure and, together with the specification, serve to explain the principles of the embodiments of the disclosure.

FIG. 1A is a schematic diagram of a communication system according to an embodiment.
FIG. 1B is a schematic diagram of a first cell and a second cell.
FIG. 2 is a schematic flowchart of an access method according to an embodiment.
FIG. 3 is a schematic flowchart of an access method according to an embodiment.
FIG. 4 is a schematic flowchart of an access method according to an embodiment.
FIG. 5 is a schematic flowchart of an access method according to an embodiment.
FIG. 6A is a schematic flowchart of a four-step random access procedure according to an embodiment.
FIG. 6B is a schematic flowchart of a two-step random access procedure according to an embodiment.
FIG. 7A is a schematic diagram of a protocol data unit (PDU) header according to an embodiment.
FIG. 7B is a schematic diagram of a PDU header according to an embodiment.
FIG. 7C is a schematic diagram of a PDU header according to an embodiment.
FIG. 7D is a schematic diagram of a PDU header according to an embodiment.
FIG. 7E is a schematic diagram of a PDU sub-header according to an embodiment.
FIG. 7F is a schematic diagram of a random access response (RAR) according to an embodiment.
FIG. 7G is a schematic diagram of a PDU sub-header according to an embodiment.
FIG. 7H is a schematic diagram of a PDU sub-header according to an embodiment.
FIG. 8A is a schematic flowchart of an access method according to an embodiment.
FIG. 8B is a schematic flowchart of an access method according to an embodiment.
FIG. 9A is a schematic diagram of a terminal according to an embodiment.
FIG. 9B is a schematic diagram of an access network device according to an embodiment.

FIG. 9C is a schematic diagram of an access network device according to an embodiment.

FIG. 10A is a schematic diagram of a terminal according to an embodiment.

FIG. 10B is a schematic diagram of a communication device according to an embodiment.

# DETAILED DESCRIPTION

Embodiments of the disclosure provide an access method, an apparatus, a communication device, a communication system, and a storage medium.

According to a first aspect of the embodiments of the disclosure, an access method is provided, and the access method includes: receiving, by a terminal, first information of a second cell from a first cell, in which a coverage of the second cell overlaps with a coverage of the first cell, or a coverage of the second cell is adjacent to a coverage of the first cell; the first information is configured for the terminal to access the second cell; and the second cell is in a dormant state, or the second cell does not transmit at least one of:

a synchronization signal block (SSB);
a system information block (SIB); or
a paging message.

Based on the foregoing solution, the terminal receives, from the first cell, the first information usable for the terminal to access the second cell. Since the second cell does not transmit at least one of the SSB, the SIB and/or the paging message, network energy saving (NES) of the second cell is achieved, and the terminal successfully accesses the second cell with an assistance of the first cell.

In combination with some embodiments of the first aspect, the second cell does not transmit the SSB, the SIB or the paging message.

Based on the foregoing solution, a characteristic of the second cell is further defined.

In combination with some embodiments of the first aspect, the first cell transmits at least one of:

the SSB;
the SIB; or
the paging message.

In combination with some embodiments of the first aspect, the first information includes at least one of:

an index of the second cell;
a cell identifier (ID) of the second cell;
beam information of the second cell, indicating whether the second cell adopts beam-based communication and/or indicating a beam configuration of beam-based communication of the second cell;
frequency point information, indicating a carrier frequency used by the second cell;
slice information, indicating whether the second cell supports a network slice and/or an ID of a supported network slice;
an access configuration, configured for the terminal to determine whether to access the second cell;
coverage information of the second cell;
reference information, configured for the terminal to determine whether the terminal is capable of accessing the second cell;
signal information, indicating a reference signal associated with the second cell; or
timing information, indicating an association relationship between a downlink (DL) timing of the first cell and a DL timing of the second cell.

Based on the foregoing embodiments, the first information may provide various types of information required for accessing the second cell, thereby conveniently and flexibly enabling the terminal to access the second cell.

In combination with some embodiments of the first aspect, the access method further includes:
in a case of satisfying a condition for accessing the second cell, sending a first message (message 1, or Msg1) to the first cell or the second cell, in which the Msg1 is configured to request an uplink (UL) scheduling.

Based on the foregoing solution, in a case where the condition for accessing the second cell is satisfied, the terminal may send the Msg1 to the first cell or the second cell, thereby initiating a process of the terminal's random access to the second cell.

In combination with some embodiments of the first aspect, the access method further includes:
receiving, by the terminal, a second message (message 2, or Msg2) from the first cell or the second cell, in which the Msg2 is a random access response (RAR) carrying a UL grant.

Based on the foregoing solution, the RAR may be sent by the first cell or the second cell. In this way, the cell sending the Msg2 may be flexibly selected according to a congestion level of the first cell and a capability of the second cell.

In combination with some embodiments of the first aspect, an information content of the Msg2 sent by the first cell for the terminal to access the second cell is different from an information content of the Msg2 sent by the first cell for the terminal to access the first cell;

or

a scrambling sequence of the Msg2 sent by the first cell for the terminal to access the second cell is different from a scrambling sequence of the Msg2 sent by the first cell for the terminal to access the first cell.

Based on the foregoing solution, the Msg2 is sent by the first cell, the RAR of the first cell thus may be distinguished by means of the information content and/or the scrambling sequence of the Msg2, thereby reducing access confusion of the terminal.

In combination with some embodiments of the first aspect, the scrambling sequence of the Msg2 for the terminal to access the second cell includes a radio access-radio network temporary identifier (RA-RNTI) associated with the second cell; and/or

the scrambling sequence of the Msg2 for the terminal to access the first cell includes an RA-RNTI associated with the first cell.

Based on the foregoing solution, the scrambling sequence is the RA-RNTI corresponding to the first cell or the second cell. In this way, a reuse of the RA-RNTI is achieved without adding a dedicated scrambling sequence, and the RA-RNTIs corresponding to the first cell and the second cell are configured to distinguish the Msg2 sent by the first cell for access to different cells.

In combination with some embodiments of the first aspect, the RA-RNTI associated with the second cell is determined according to a cell ID of the second cell.

Based on the foregoing solution, the RA-RNTI associated with the second cell is related to the cell ID of the second cell. In this way, when one first cell simultaneously assists a terminal access of a plurality of adjacent second cells, the RA-RNTIs may also be well distinguished.

In combination with some embodiments of the first aspect, a different information content between the Msg2 sent by the first cell for the terminal to access the second cell and the Msg2 sent by the first cell for the terminal to access the first cell includes one of:

a cell indication; and
timing information.

Based on the foregoing solution, the cell indication may further clearly indicate for which second cell the current Msg2 is intended. The timing information may be used for synchronization between the terminal and the second cell, thereby improving a probability that the terminal successfully accesses a target second cell.

In combination with some embodiments of the first aspect, the cell indication is carried in at least one of:

a header of a medium access control (MAC) protocol data unit (PDU) of the Msg2;
a PDU sub-header of the Msg2, in which the MAC PDU includes a sub-PDU, and the PDU sub-header is a header of the sub-PDU; or
an RAR of a MAC sub-PDU of the Msg2.

Based on the foregoing solution, a carrying manner of the cell indication in the Msg2 may be any of the aforementioned ones, thereby enabling flexible configuration and selection as required.

In combination with some embodiments of the first aspect, the cell indication is carried in a reserved R field of a PDU header of the Msg2;

or

the cell indication is carried in an R field and a backoff indicator (BI) field of a PDU header of the Msg2.

The foregoing solution provides a specific implementation of how to carry the cell indication.

In combination with some embodiments of the first aspect, the BI field includes a first bit and a second bit, the first bit and the R field are configured to carry the cell indication, and the second bit indicates a BI index value.

Based on the foregoing solution, when the BI field is configured to carry the cell indication, bits corresponding to the BI field are divided into the first bit and the second bit. In this way, a multiplexing of the BI field for carrying both the cell indication and a BI value is achieved.

In combination with some embodiments of the first aspect, the second bit indicates one of:

the BI index value within a first range;

an even BI index value within a second range; and
an odd BI index value within the second range,
in which the first range is a subset of the second range, and the first range includes continuously distributed BI index values.

The foregoing solution provides a specific implementation of how to indicate the BI index value after reducing a number of bits dedicated to indicating the BI index value in the BI field, which features simplicity in implementation. In addition, in the case where the second bit indicates the BI index value within the second range, although a number of indication bits for indicating the BI index value is reduced, a range of the indicated BI index value is not narrowed or a reduction margin is small.

In combination with some embodiments of the first aspect, one bit value of the second bit indicates two adjacently distributed BI index values within a second range, and a BI value corresponding to the second bit is: an average value of BI values indicated by the two adjacently distributed BI index values indicated by the second bit, a rounded-up value of the average value, or a rounded-down value of the average value.

Based on the foregoing solution, by adopting this method, it is also possible to avoid or minimize narrowing the range of the indicated BI index value when the number of bits used for indicating the BI index value is reduced.

In combination with some embodiments of the first aspect, the timing information carried in the Msg2 sent by the first cell for the terminal to access the first cell indicates a first timing advance (TA); and

the timing information carried in the Msg2 sent by the first cell for the terminal to access the second cell indicates a difference value between the first TA and a second TA,
in which the first TA is configured for communication between the terminal and the first cell; and
the second TA is configured for communication between the terminal and the second cell.

Based on the foregoing solution, when relative positions between the terminal and center points of the first cell and the second cell are different, the TAs for communication between the terminal and the respective cells are different. In the embodiments of the disclosure, the timing information is directly configured in the Msg2, which indicates the second TA to the terminal based on the first TA of the first cell with a lower bit overhead.

In combination with some embodiments of the first aspect, the access method further includes:
sending, by the terminal, a third message (message 3, or Msg3) to the first cell or the second cell, in which the Msg3 is configured for the terminal to request to access the second cell.

Based on the foregoing solution, after the terminal receives the Msg2 destined for itself, the terminal sends the Msg3 to the first cell or the second cell, thereby formally entering the process of accessing the second cell and ensuring the terminal successfully accesses the second cell.

In combination with some embodiments of the first aspect, the access method further includes:
receiving, by the terminal, a fourth message (message 4, or Msg4) sent by the first cell or the second cell, in which the Msg4 is configured for the terminal to confirm that the terminal has accessed to the second cell.

Based on the foregoing solution, when the terminal successfully receives the Msg4 from the first cell and/or the second cell, this indicates that the terminal has successfully accessed the second cell.

According to a second aspect of the embodiments of the disclosure, an access method is provided, which is executed by an access network device of a first cell or a second cell, where the first cell is a neighboring cell of the second cell. The access method includes:
sending first information by an access network device of a first cell or a second cell, in which the first information is configured for a terminal to access the second cell; and the second cell is in a dormant state, or the second cell does not transmit at least one of:

an SSB;
an SIB; or
a paging message,
in which a coverage of the second cell overlaps with a coverage of the first cell, or a coverage of the second cell is adjacent to a coverage of the first cell.

In combination with some embodiments of the second aspect, the first information includes at least one of:

an index of the second cell;
**a** cell ID of the second cell;
beam information of the second cell, indicating whether the second cell adopts beam-based communication and/or indicating a beam configuration of beam-based communication of the second cell;

frequency point information, indicating a carrier frequency used by the second cell;

slice information, indicating whether the second cell supports a network slice and/or an ID of a supported network slice;

an access configuration, configured for the terminal to determine whether to access the second cell;

coverage information of the second cell;

reference information, configured for the terminal to determine whether the terminal is capable of accessing the second cell;

signal information, indicating a reference signal associated with the second cell; or

timing information, indicating an association relationship between a DL timing of the first cell and a DL timing of the second cell.

In combination with some embodiments of the second aspect, the access method further includes:
receiving a Msg1, in which the Msg1 is configured to request a UL scheduling of the second cell in a case where a condition for accessing the second cell is satisfied.

In combination with some embodiments of the second aspect, the access method further includes:
receiving a Msg1, in which the Msg1 is configured to request a UL scheduling of the second cell in a case where a condition for accessing the second cell is satisfied.

In combination with some embodiments of the second aspect, the access method further includes:
transmitting a Msg2, in which the Msg2 is an RAR carrying a UL grant.

In combination with some embodiments of the second aspect, an information content of the Msg2 sent by the first cell for the terminal to access the second cell is different from an information content of the Msg2 sent by the first cell for the terminal to access the first cell;

or

a scrambling sequence of the Msg2 sent by the first cell for the terminal to access the second cell is different from a scrambling sequence of the Msg2 sent by the first cell for the terminal to access the first cell.

In combination with some embodiments of the second aspect, the scrambling sequence of the Msg2 for the terminal to access the second cell includes an RA-RNTI associated with the second cell; and/or

the scrambling sequence of the Msg2 for the terminal to access the first cell includes an RA-RNTI associated with the first cell.

In combination with some embodiments of the second aspect, the RA-RNTI associated with the second cell is determined according to a cell ID of the second cell.

In combination with some embodiments of the second aspect, a different information content between the Msg2 sent by the first cell for the terminal to access the second cell and the Msg2 sent by the first cell for the terminal to access the first cell includes one of:

a cell indication; and

timing information.

In combination with some embodiments of the second aspect, the cell indication is carried in at least one of:

a header of a MAC PDU of the Msg2;

a PDU sub-header of the Msg2, in which the MAC PDU includes a sub-PDU, and the PDU sub-header is a header of the sub-PDU; or

an RAR of a MAC sub-PDU of the Msg2.

In combination with some embodiments of the second aspect, the cell indication is carried in a reserved R field of a PDU header of the Msg2;

or

the cell indication is carried in an R field and a BI field of a PDU header of the Msg2.

In combination with some embodiments of the second aspect, the BI field includes a first bit and a second bit, the first bit and the R field are configured to carry the cell indication, and the second bit indicates a BI index value.

In combination with some embodiments of the second aspect, the second bit indicates one of:

the BI index value within a first range;

an even BI index value within a second range; and

an odd BI index value within the second range,

in which the first range is a subset of the second range, and the first range includes continuously distributed BI index values.

In combination with some embodiments of the second aspect, one bit value of the second bit indicates two adjacently distributed BI index values within a second range, and a BI value corresponding to the second bit is: an average value of BI values indicated by the two adjacently distributed BI index values indicated by the second bit, a rounded-up value of the average value, or a rounded-down value of the average value.

In combination with some embodiments of the second aspect, the timing information carried in the Msg2 sent by the first cell for the terminal to access the first cell indicates a first TA; and

the timing information carried in the Msg2 sent by the first cell for the terminal to access the second cell indicates a difference value between the first TA and a second TA,
in which the first TA is configured for communication between the terminal and the first cell; and
the second TA is configured for communication between the terminal and the second cell.

In combination with some embodiments of the second aspect, the access method further includes:
receiving a Msg3, in which the Msg3 is configured for the terminal to request to access the second cell.

In combination with some embodiments of the second aspect, the access method further includes:
the terminal receiving a Msg4 sent by the first cell or the second cell, in which the Msg4 is configured for the terminal to confirm that the terminal has accessed to the second cell.

According to a third aspect of the embodiments of the disclosure, a terminal is provided, which includes:
a receiving module configured to receive first information of a second cell from a first cell, in which a coverage of the second cell overlaps with a coverage of the first cell, or a coverage of the second cell is adjacent to a coverage of the first cell; the first information is configured for the terminal to access the second cell; and the second cell does not transmit at least one of:

an SSB;
an SIB; or
a paging message.

According to a fourth aspect of the embodiments of the disclosure, an access network device is provided, which includes:
a sending module configured to transmit first information in a first cell or a second cell, in which the first information is configured for a terminal to access the second cell; and the second cell is in a dormant state, or the second cell does not transmit at least one of:

an SSB;
an SIB; or
a paging message,
in which a coverage of the second cell overlaps with a coverage of the first cell, or a coverage of the second cell is adjacent to a coverage of the first cell.

According to a fifth aspect of the embodiments of the disclosure, an access method is provided, which includes:

a terminal performing the access method in any technical solution of the first aspect; and
an access network device performing the access method in any technical solution of the second aspect.

According to a sixth aspect of the embodiments of the disclosure, a communication system is provided, which includes a terminal and access network device. The terminal is configured to perform the access method in any technical solution of the first aspect, and the access network device is configured to perform the access method in any technical solution of the second aspect.

According to a seventh aspect of the embodiments of the disclosure, a communication device is provided, including:

one or more processors,
in which the one or more processors are configured to invoke instructions to cause the communication device to execute the access method in the optional implementations of the first aspect and/or the second aspect.

According to an eighth aspect of the embodiments of the disclosure, a storage medium is provided, in which the storage medium stores instructions. When the instructions are executed on a communication device, the communication device is caused to execute the access method in the optional implementations of the first aspect and/or the second aspect.

According to a ninth aspect of the embodiments of the disclosure, a program product is provided. When the program product is executed by a communication device, the communication device is caused to execute the access method in the optional implementations of the first aspect and/or the second aspect.

According to a tenth aspect of the embodiments of the disclosure, a computer program is provided. When the computer program is run on a computer, the computer is caused to execute the access method in the optional implementations of the first aspect and/or the second aspect.

It may be understood that the aforementioned terminal, access network device, communication device, communication system, storage medium, program product, and computer program are all configured to execute the methods proposed in the embodiments of the disclosure. Therefore, the beneficial effects they can achieve may refer to the beneficial effects in the corresponding methods, which are not repeated here.

The embodiments of the disclosure provide an access method and apparatus, a communication device, a communication system, and a storage medium. In some embodiments, the terms such as access method, information processing method and access method may be used interchangeably, the terms such as information indication apparatus, information processing apparatus and information transmission apparatus may be used interchangeably, and the terms such as communication system and information processing system may be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

**In** some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, terms such as "apparatus" may be interpreted as either physical or virtual, and their names are not limited to those recorded in the embodiments. Terms including "apparatus", "equipment", "device", "circuit", "network element", "node", "function", "unit", "section", "system", "network", "chip", "chip system", "entity" and "subject" may be used interchangeably with one another.

In some embodiments, the term "network" may be interpreted as an apparatus included in a network (e.g., an access network device, a core network device, etc.).

In some embodiments, terms such as "access network device (AN device)", "radio access network device (RAN device)", "base station (BS)", "radio base station", "fixed station", and, in some embodiment, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably with one another.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably with one another.

In some embodiments, an access network device, a core network device, or a network device may be replaced with a terminal. For example, the embodiments of the disclosure are also applicable to architectures where communication between an access network device, a core network device, or a network device and a terminal is replaced with communication among multiple terminals (e.g., device-to-device (D2D), vehicle-to-everything (V2X), etc.). In this case, a configuration may also be adopted in which a terminal has all or part of the functions of an access network device. In addition, terms such as "UL" and "DL" may also be replaced with terms corresponding to inter-terminal communication (e.g., "sidelink"). For example, a UL channel, a DL channel, etc., may be replaced with a sidelink channel, and a UL, a DL, etc., may be replaced with a sidelink.

In some embodiments, a terminal may be replaced with an access network device, a core network device, or a network device. In this case, a configuration may also be adopted in which an access network device, a core network device, or a network device has all or part of the functions of a terminal.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

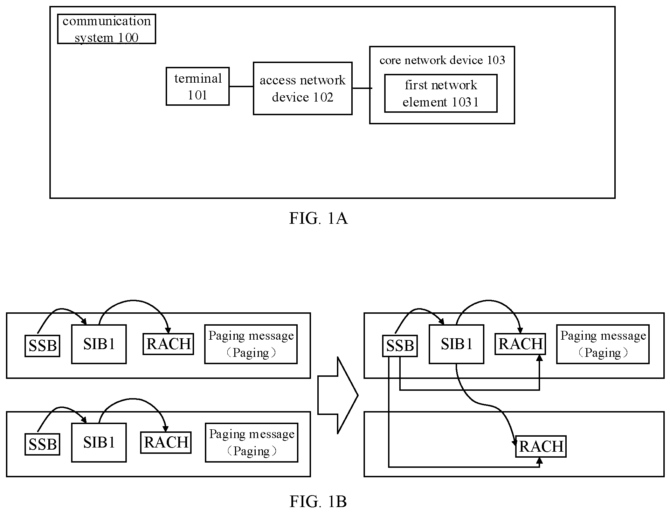

FIG. 1A is a schematic diagram of a communication system according to an embodiment of the disclosure.

As shown in FIG. 1A, a communication system 100 includes a terminal 101, an access network device 102 and a core network device 103.

In some embodiments, the terminal 101 includes, for example, at least one of a mobile phone, a wearable device, an Internet of Things (IoT) device, a vehicle with communication functions, an intelligent vehicle, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device 102 is, for example, a node or device that accesses terminals to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open radio access network (RAN)), a cloud base station (cloud RAN), a base station in other communication systems, and an access node in a wireless fidelity (Wi-Fi) system, but is not limited thereto.

In some embodiments, the technical solutions of the disclosure are applicable to an Open RAN architecture. In this case, interfaces between access network devices or within an access network device involved in the embodiments of the disclosure may be converted to internal interfaces of the Open RAN, and procedures and information interaction between these internal interfaces may be implemented by software or programs.

In some embodiments, the access network device may be composed of a central unit (CU) and a distributed unit (DU). The CU may also be referred to as a control unit. The CU-DU structure may split the protocol layers of the access network device, with functions of some protocol layers centrally controlled by the CU, and functions of the remaining part or all of the protocol layers distributed in the DU, where the CU centrally controls the DU, but is not limited thereto.

In some embodiments, the core network device 103 may be a single device including a first network element 1031 and the like, or may be a plurality of devices or device groups respectively including the first network element 1031 respectively. A network element may be virtual or physical. A core network includes, for example, at least one of an evolved packet core (EPC), a 5G core network (5GCN), or a next generation core (NGC).

In some embodiment, the first network element 1031 is, for example, an access and mobility management function (AMF) entity。

In some embodiment, the first network element 1031 is, for example, a mobility management entity (MMF)。

In some embodiments, the first network element 1031 is configured to perform access and mobility management, such as registration management, connection management and mobility management, and the name is not limited thereto.

In some embodiments, the first network element 1031 may be a network element independent from the core network device.

In some embodiments, the core network may further include a second network element and the like, where the second network element may include a user data management (UDM) and the like.

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1A, or some subjects in the communication system 100, but are not limited thereto. Each subject shown in FIG. 1A is an example. The communication system may include all or part of the subjects in FIG. 1A, or may include other subjects not shown in FIG. 1A. The number and form of each subject are arbitrary. The connection relationship between each subject is an example. Each subject may be unconnected or connected, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

To reduce network energy consumption, the NES is activated, and thus an energy-saving cell is introduced in addition to a conventional cell.

For example, the terminal may enter a NES mode.

A discontinuous reception (DRX)/discontinuous transmission (DTX) mode, where a cell periodically refrains from transmitting and/or receiving at certain intervals.

**An** SSB/SIB1-less cell;
Antenna port adaptation;
Physical downlink shared channel (PDSCH) transmission power adaptation.

As illustrated in FIG. 1B, the SSB/SIB1-less cell does not transmit an SSB, an SIB1, other SIBs and/or a paging message. However, a random access channel (RACH) procedure may be initiated to the SSB/SIB1-less cell. The SSB/SIB1-less cell does not transmit the SSB, and the SIB1 is broadcast and configured via an associated cell.

The following solution is provided for ensuring a successful access of the terminal to such an energy-saving cell.

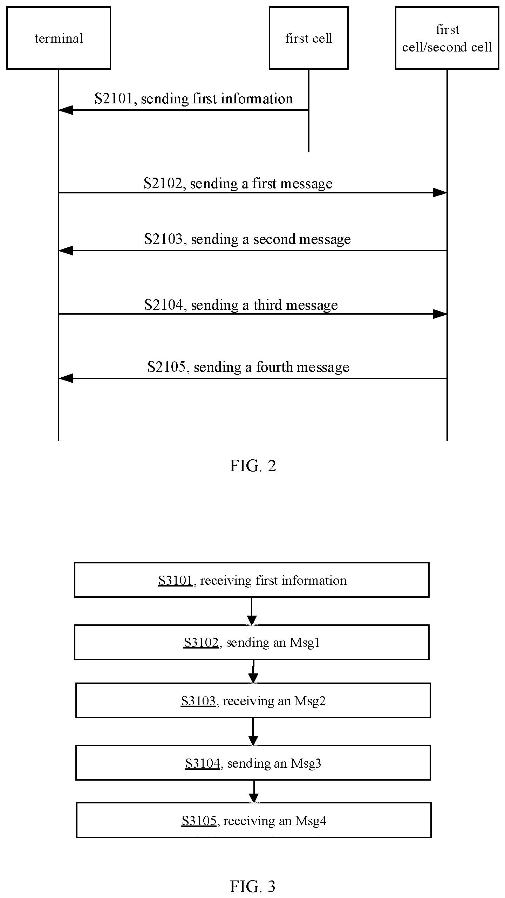

FIG. 2 is an interaction diagram illustrating an access method according to an embodiment of the disclosure. As shown in FIG. 2, an embodiment of the disclosure relates to an access method, performed by a communication system 100. The access method includes:

At S2101, a first cell transmits first information.

In some embodiments, the first cell is a conventional cell.

**In** some embodiments, the first cell is a cell sending the SSB, the SIB and/or the paging message. The paging message may include a core network (CN) paging message and/or an RAN paging message.

In some embodiments, the first cell is a neighboring cell of a second cell.

In other embodiments, a coverage area of the first cell and a coverage area of the second cell overlap at least partially.

In some embodiments, the first cell may be a cell on which the terminal is currently camped, and the second cell may be a next cell on which the terminal is to camp.

In some embodiments, the first cell may be a current serving cell of the terminal, and the second cell may be a next serving cell of the terminal.

In some embodiments, the first cell may be a cell to which the terminal has been accessed, and the second cell may be a target cell to which the terminal is to be accessed.

In some embodiments, the first cell is a macro cell, a 4G cell, a 5G cell, or the like.

In some embodiments, the second cell may be an energy-saving cell.

In some embodiments, the coverage of the second cell overlaps with the coverage of the first cell.

In some embodiments, the coverage of the second cell is adjacent to the coverage of the first cell.

In some embodiments, the second cell and the first cell are neighboring cells of each other.

In some embodiments, the second cell includes but is not limited to at least one of:

**an** SSB/SIB1-less cell, which is exemplarily the energy-saving cell that does not transmit the SSB, the SIB and/or the paging message;

a DRX cell;

a DTX cell;

a cell with antenna port adaptation;

a cell with PDSCH transmission power adaptation; or

a dormant cell, i.e., a cell in a dormant state.

In some embodiments, the second cell does not transmit the SSB, the SIB or the paging message.

**In** some embodiments, the second cell is a cell that does not transmit the SSB, the SIB and/or the paging message. For example, the SIB include at least SIB1.

In some embodiments, the SIB transmitted by the second cell may be SIB2, SIB3, SIB4, or the like. That is, the second cell may be the SSB/SIB1-less cell.

In some embodiments, the second cell does not transmit the SSB, the SIB1 and/or the paging message.

In some embodiments, the second cell may be the cell in the dormant state. A power consumption of the second cell in the dormant state is lower than a power consumption of the second cell in an active state. After exiting the dormant state and entering the active state, the second cell may provide communication services for the terminal. Alternatively, the second cell in the dormant state reduces a transmission of certain signals, making it impossible for the terminal to discover the second cell directly based on the signal transmitted by the second cell. However, the second cell may still provide communication services for the terminal that has already accessed the second cell.

For example, when the second cell is in the dormant state, the second cell does not transmit the SSB, the SIB1 and/or the paging message.

In some embodiments, in which the first cell transmits at least one of:

the SSB;

the SIB; or

the paging message.

In some embodiments, the first cell broadcasts, multicasts or unicasts the first information.

In some embodiments, the first information is configured for the terminal to access the second cell.

In some embodiments, the first information is configured for the terminal to access the second cell by using a random access procedure.

The random access procedure may involve an initial access of the terminal, a random access of the terminal during a cell reselection procedure, and a random access of the terminal during a beam recovery and/or connection recovery procedure.

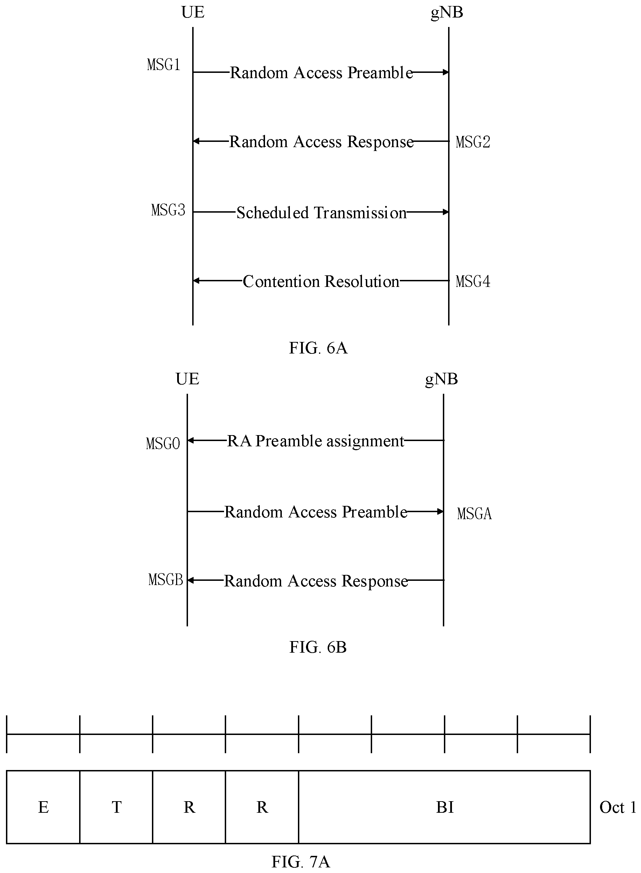

In some embodiments, the random access procedure may include a two-step random access procedure. As illustrated in FIG. 6B, the two-step random access procedure assigns an RA preamble via message 0 (Msg 0) and completes the random access procedure via message A (Msg A) and message B (Msg B).

In other embodiments, the random access procedure may include a four-step random access procedure. FIG. 6A shows the four-step random access procedure.

In some embodiments, the random access procedure includes but is not limited to a contention-based random access procedure.

In some embodiments, the first cell broadcasts, multicasts or unicasts the first information.

In some embodiments, the first cell transmits the first information via a radio resource control (RRC) message.

The terminal camped on the first cell or located within an overlapping coverage area of the first cell and the second cell shall receive the first information transmitted by the first cell.

In some embodiment, the first information includes at least one of:

an index of the second cell;
a cell ID of the second cell;
beam information of the second cell, indicating whether the second cell adopts beam-based communication and/or indicating a beam configuration of beam-based communication of the second cell;
frequency point information, indicating a carrier frequency used by the second cell;
slice information, indicating whether the second cell supports a network slice and/or an ID of a supported network slice;
an access configuration, configured for the terminal to determine whether to access the second cell;
coverage information of the second cell;
reference information, configured for the terminal to determine whether the terminal is capable of accessing the second cell;
signal information, indicating a reference signal associated with the second cell; or
timing information, indicating an association relationship between a DL timing of the first cell and a DL timing of the second cell.

The second cell is assigned the cell ID (identifier/identity/identification). However, since a length of a typical cell ID is relatively large, an index with a shorter length may be used to refer to the second cell. For example, when there are M second cells around the first cell, the first cell may number these M second cells to generate indices for the M second cells. In this way, the first cell may reduce a signaling overhead by carrying such indices.

For example, the first cell may sequentially number a plurality of adjacent second cells, where the sequential numbering of the second cells may start from 1.

In some embodiments, to simplify an operation of the first cell, the first information may directly carry the cell ID of the second cell.

In some embodiments, the cell ID may include, but is not limited to, at least one of:

a physical cell ID (PCI), used for a physical layer transmission;
a logical cell ID, used for a higher layer transmission;
an RAN area ID;
an RAN notification area code (RNAC);
a tracking area code (TAC); or
a system information area ID (e.g., system information area identifier).

Of course, the above are merely examples of cell ID, and specific implementations are not limited thereto.

The beam information indicates whether the second cell adopts the beam-based communication.

In some embodiments, the beam information may include an indicator, which may indicate whether the second cell adopts the beam-based communication.

In some embodiments, when the second cell does not adopt the beam-based communication, the beam information may be omitted, and the terminal may default that the second cell does not use a beam.

In other embodiments, when the second cell adopts the beam-based communication, the beam information includes the beam configuration.

In some embodiments, the beam configuration may include, but is not limited to, at least one of:

a beam ID;
a beam direction;

a frequency domain resource of a beam;

a time domain resource of a beam; or

a number of beams of the second cell.

The beam configuration may be: a periodic configuration, a semi-persistent configuration and/or a dynamic configuration.

Of course, the above are merely examples of the beam configuration.

In some embodiments, the frequency point information may indicate at least one of:

a frequency layer of the second cell;

a frequency point used by the second cell;

a frequency band used by the second cell;

a division of BWP of the second cell;

a system bandwidth of the second cell; or

a DL initial BWP. For example, the same or different DL initial BWPs may be configured for different types of terminals, and the DL initial BWP may be configured for the initial access of the terminal.

Of course, the above are merely examples of the frequency point information, and specific implementations are not limited thereto.

In some embodiments, the second cell may support network slicing or may not support network slicing.

In some embodiments, when the second cell supports the network slicing, the first information may include the slice information. When the second cell does not support the network slicing, the first information may not include the slice information.

In some embodiments, the slice information may include an indicator indicating whether the second cell supports the network slicing, so that the terminal intending to use a network slice for communication may select to access the second cell.

In some embodiments, the slice information may include an ID of a network slice supported by the terminal, where the ID may include but are not limited to at least one of:

single network slice selection assistance information (S-NSSAI);

a slice/service type;

a slice differentiator; or

network slice selection assistance information (NSSAI).

In some embodiments, in scenarios where the second cell does not support the network slicing or the second cell will independently inform the terminal of the network slice supported by the second cell subsequently, the slice information may be omitted from the first information.

In some embodiments, the access configuration may indicate any configuration information related to accessing the second cell.

In some embodiments, the access configuration may include but is not limited to: an RACH-related configuration.

The RACH-related configuration may indicate but are not limited to at least one of:

a time-frequency domain position of an RACH for accessing the second cell;

a random access preamble for accessing the second cell;

a corresponding relationship between the random access preamble for accessing the second cell and the SSB of the first cell;

a corresponding relationship between the RACH for accessing the second cell and the SSB of the first cell;

a corresponding relationship between the RACH for accessing the second cell and the beam of the second cell;

a corresponding relationship between the random access preamble for accessing the second cell and the beam of the second cell;

a corresponding relationship between the RACH for accessing the second cell and the beam of the first cell;

a corresponding relationship between the random access preamble for accessing the second cell and the beam of the first cell;

a condition for initiating a random access to the second cell.

In some embodiments, the time-frequency domain position of the RACH of the first cell and the time-frequency domain position of the RACH of the second cell are different, so that it may be distinguished whether the terminal requests to access the first cell or the second cell according to the RACH.

In some embodiments, the random access preamble for accessing the first cell and the random access preamble for accessing the second cell may be different. In this case, the terminal sends an Msg1 to the first cell, and the first cell may distinguish whether the current terminal requests to access the first cell or the second cell according to the random access preamble carried in the Msg1.

For example, the SSB of the first cell may be used for a beam transmission. When the corresponding relationship between the random access preamble for the second cell and the SSB of the first cell is established, the terminal may select, according to the SSB of the first cell detected by the terminal, the corresponding random access preamble to request the random access. At this time, after receiving such a random access preamble, the network device may estimate a location of the terminal according to the corresponding relationship between the random access preamble and the SSB of the first cell, combined with the beam direction in which the SSB is transmitted.

As another example, the beam in the corresponding relationship between the RACH for accessing the second cell and the beam of the second cell includes but are not limited to at least one of: a beam used by the first cell to transmit the reference signal, or a serving beam for communication between the terminal and the first cell. In short, the terminal may select to initiate the random access request procedure on the corresponding RACH according to this corresponding relationship.

In some embodiments, there is the corresponding relationship between the random access preamble for accessing the second cell and the beam of the first cell, so that the terminal may select an appropriate random access preamble to initiate the random access procedure according to the serving beam of the terminal in the first cell or the beam available for use.

In some embodiments, the condition for initiating the random access to the second cell may include but are not limited to at least one of:

> that a measured value of the reference signal of the first cell is less than a threshold value;
> entering the coverage area of the second cell;
> entering a specified range of the first cell;
> detecting a specified beam of the first cell; or
> that the serving beam of the terminal is a specified beam.

In some embodiments, entering the specified range of the first cell may include entering a overlapping range of the first cell and the second cell.

In other embodiments, detecting the specified beam or the serving beam being the specified beam indicates that the terminal enters the coverage area of the second cell.

In some embodiments, the coverage information may be configured by the terminal to determine the coverage of the second cell. Thus, on the one hand, it facilitates the terminal to confirm whether the terminal is located within the range of the second cell, or whether the terminal is located at a cell center or a cell edge of the second cell.

A content indicated by the coverage information may specifically include but is not limited to at least one of:

> indicating a coverage range of the second cell;
> indicating a coverage level of the second cell;
> indicating a maximum radiated power of the second cell; or
> indicating a coverage difference of the second cell relative to the first cell.

Of course, the above are merely illustrative examples of the content indicated by the coverage information, and specific implementations are not limited thereto.

In some embodiments, the reference information may be configured by the terminal to determine whether the terminal is allowed to access the second cell or whether the terminal is capable of accessing the second cell.

In some embodiments, the reference information may include condition information indicating a condition for accessing the second cell.

The condition may define a type of terminal allowed to access the second cell, a terminal location, a condition to be satisfied by a measurement value of the reference signal of the first cell by the terminal, and/or a condition to be satisfied by a measurement value of the reference signal of the second cell by the terminal.

In some cases, the second cell may only support an access by a specific type of terminal.

In some cases, the second cell only supports an access by the terminal located at a specific position, so as to improve a communication quality of the terminal accessing the second cell.

In some embodiments, the terminal measures the reference signal of the first cell in the first cell. When it is detected that the measurement value of the reference signal of the first cell decreases, the terminal may need to hand over to the second cell for communication services, or need the second cell to assist the first cell in providing communication services to the terminal.

For example, the condition to be satisfied by the measurement value of the reference signal of the first cell by the terminal may include:

that the measurement value of the reference signal of the first cell by the terminal is less than or equal to a first threshold and greater than a second threshold, where the first threshold is greater than the second threshold.

In some embodiments, the reference information may also indicate a measurement quantity required to meet a specific condition.

In some embodiments, the measurement quantity may include but is not limited to at least one of:

a reference signal received power (RSRP);
a reference signal receiving quality (RSRQ); or
a signal to interference plus noise ratio (SINR).

In some embodiments, the reference signal of the first cell measured by the terminal includes but is not limited to at least one of:

the SSB; or
a channel state information-reference signal (CSI-RS); etc.

In some embodiments, the second threshold may be a threshold for the terminal to hand over to other conventional cells. The first cell herein is a type of conventional cell. The conventional cell transmits the SSB, the SIB and/or the paging message.

As another example, the condition to be satisfied by the measurement value of the reference signal of the second cell by the terminal may include:

that the measurement value of the reference signal of the second cell by the terminal is greater than a third threshold.

The reference signal of the second cell may include but is not limited to the CSI-RS, a demodulation reference signal and/or a phase tracking signal, etc.

The signal information may include information about a DL reference signal and/or information about a UL reference signal.

In some embodiments, the DL reference signal may include but is not limited to at least one of: the CSI-RS, the demodulation reference signal and/or the phase tracking signal, a positioning reference signal, etc.

The UL reference signal may include but is not limited to the positioning reference signal, etc.

In some embodiments, the signal information may also include a signal configuration.

In some embodiments, the signal information may indicate a DL signal set.

One or more DL signals are configured in the DL signal set, and these DL signals are associated with the second cell.

For example, these DL signals may indicate the coverage range of the second cell.

In some embodiments, the DL signal set may include but is not limited to a CSI-RS set and/or an SSB set.

The DL signal set may be configured to determine whether the terminal enters the coverage area of the second cell.

In some embodiments, the DL signals in the DL signal set and a threshold value may be used in combination for the terminal to determine whether the terminal is located within the coverage area of the second cell, or for the first cell to identify the terminals that has entered the coverage area of the second cell.

In some embodiments, the threshold value herein may be single beam-based or beam group-based.

In other embodiments, the threshold value herein may be single DL signal-based or DL signal group-based.

For example, the signal configuration may include:

time-frequency resource information of the reference signal, indicating the time-frequency domain resource for transmitting the reference signal;
a transmission mode, indicating whether the reference signal is transmitted using the beam; or
the DL reference signal transmitted by the second cell and/or the UL reference signal that the second cell requires the terminal to transmit.

In some embodiments, the DL reference signal configured by the second cell may include, but are not limited to, a downlink wake-up signal (DL-WUS) and/or an uplink wake-up signal (UL-WUS).

Of course, the above are merely examples of signal information, and specific implementations are not limited thereto.

In some embodiments, the timing information is configured to determine the DL timing and/or a UL timing of the second cell.

In some embodiments, the timing information may also indicate a DL timing offset between the first cell and the second cell.

In some embodiments, the timing information may also indicate a TA of the terminal in the second cell.

In some embodiments, the timing information may also be configured to determine a timing offset between the first TA of the terminal in the first cell and the second TA.

In some embodiments, the timing information may carry an initial TA, which may be used in conjunction with a TA offset in a subsequent Msg2 to determine the second TA for the communication of the terminal in the second cell.

It should be noted that the above are merely examples of the information content carried by the first information, and specific implementations are not limited thereto.

At S2102, a first message is sent.

In some embodiments, the terminal sends the first message to the first cell or the second cell, where the first message may be an Msg1.

In some embodiments, the Msg1 is configured for the terminal to request a UL scheduling.

In some embodiments, the UL scheduling may include a scheduling of the UL grant for an Msg3 for requesting the first cell or the second cell to perform the random access procedure.

In some embodiments, the Msg1 may include the random access preamble.

In some embodiments, the Msg1 is a message sent by the terminal to initiate the random access procedure for the second cell.

In some embodiments, the terminal may send the Msg1 on the RACH for requesting access to the second cell.

In some embodiments, the terminal sends the Msg1 when the condition for accessing the second cell is satisfied.

In some embodiments, the terminal sends the Msg1 to the first cell or the second cell when the condition for accessing the second cell is satisfied.

At S2103, a second message is sent.

In some embodiments, the first cell sends the second message to the terminal, where the second message may be Msg2.

In some embodiments, the second cell sends the Msg2 to the terminal.

In some embodiments, after receiving one or more Msg1s, the first cell or the second cell sends the Msg2 in return to some or all of the terminals.

In some embodiments, the first cell or the second cell sends the Msg2 based on the Msg1.

In some embodiments, the Msg2 may include an RAR.

In some embodiments, the Msg2 may include a random access preamble identity (RAPID).

After receiving the Msg2, the terminal decodes the Msg2. When the Msg2 carries the RAPID corresponding to the random access preamble sent by the terminal in the Msg1, the terminal determines that the Msg2 is intended for this terminal.

In some embodiments, the Msg2 may further include a UL grant.

In some embodiments, the UL grant may be a UL grant of the first cell.

In other embodiments, the UL grant may be a UL grant of the second cell.

In some embodiments, when the Msg2 is sent by the first cell, the first cell distinguishes between the Msg2s for accessing the first cell and the second cell based on an information content and/or a scrambling sequence of the Msg2.

In some embodiments, the information content of the Msg2 sent by the first cell for the terminal to access the second cell is different from the information content of the Msg2 sent by the first cell for the terminal to access the first cell.

In this manner, the terminal may determine whether the Msg2 is for the random access procedure of the second cell or the first cell based on the information content.

In some embodiments, a difference information content between the Msg2 sent by the first cell for accessing the second cell and the Msg2 sent by the first cell for accessing the first cell includes one of: a cell indication; and timing information.

In some embodiments, the cell indication may indicate the first cell or the second cell.

In other embodiments, the cell indication may indicate the specific second cell.

For example, the cell indication may correspond to two bits, which may indicate four second cells adjacent to the first cell. Different bit values of the two bits may refer to different second cells.

In some embodiments, the timing information may indicate the TA, e.g., the TA of the terminal in the second cell.

In some embodiments, the timing information may indicate a difference between the TAs of the terminal in the first cell and the second cell.

In some embodiments, the cell indication is carried in a header of a MAC PDU.

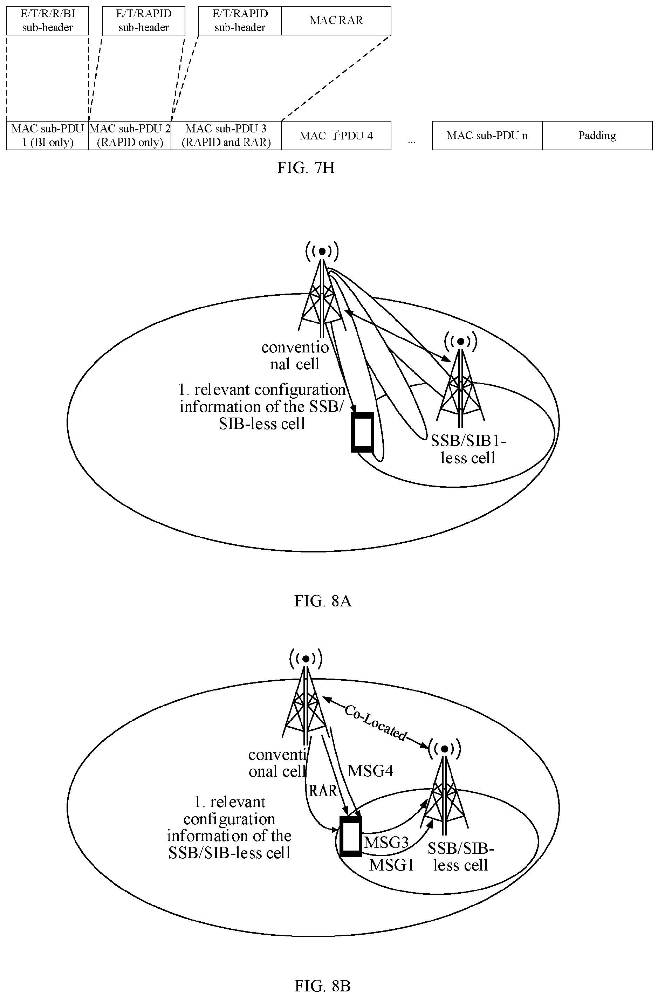

FIG. 7A shows a MAC PDU, which may also be referred to as a PDU for short.

The PDU may include one or more sub-headers and padding, where the padding is optional.

In some embodiments, the cell indication is carried in a reserved R field of a PDU header.

In some embodiments, part or all of the bits of the R field may be configured to carry the cell indication.

As shown in FIG. 7A, the PDU header includes the R field containing two bits. As shown in FIG. 7A, the PDU header may include one or more octets (Octs), where one Oct includes 8 bits. The PDU header may also be referred to as a BI sub-header.

E in FIG. 7A represents an extension field, which indicates whether there are other PDU sub-headers in the PDU.

T in FIG. 7A represents a type field, which indicates whether the sub-header carries a BI field or an RAPID field. The BI field indicates a BI index value, and the RAPID field indicates the RAPID.

Both bits of the R field may indicate the second cell. In this case, the R field with the two bits may not only indicate the second cell via the cell indication but also indicate the specific second cell.

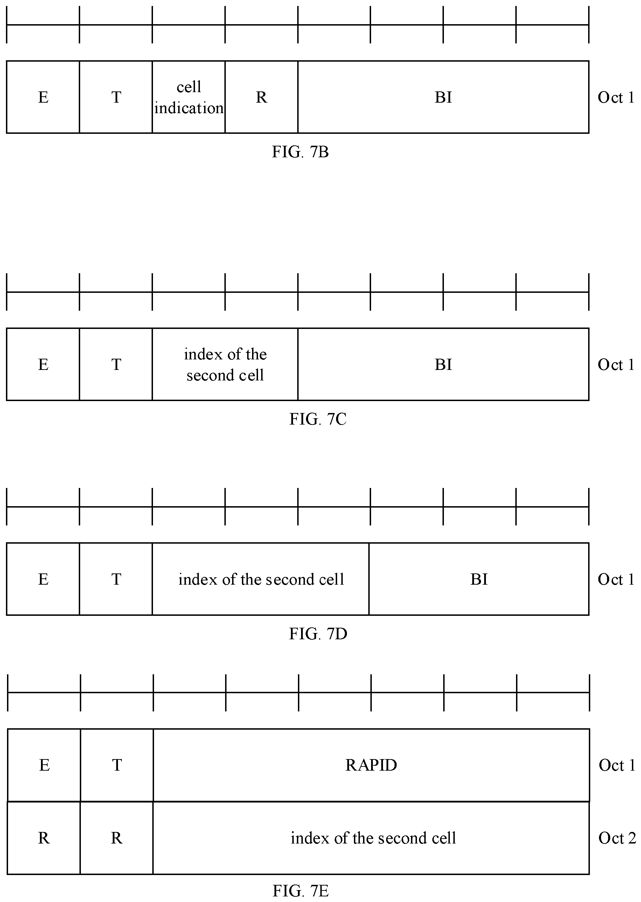

In some embodiments, one bit in the R field of the PDU header may be configured to carry the cell indication. The cell indication may indicate whether the Msg2 is intended for the terminal access to the first cell or the second cell. FIG. 7B shows a PDU header where one bit in the R field is configured to carry the cell indication. For example, the PDU header may also be referred to as a PDU head.

In some embodiments, two bits in the R field of the PDU header may be configured to carry the cell indication. The cell indication may be used by one first cell to indicate the terminal access to a specific one of the two second cells assisted by the one first cell. FIG. 7C is a schematic diagram of a PDU head where both bits of the R field are configured to carry the cell indication. In this case, the cell indication may carry the index of the second cell.

In some embodiments, the cell indication is carried in the R field and the BI field of the PDU header.

The BI field is configured to indicate a BI value.

In the embodiments of the disclosure, the R field and part of the bits in the BI field may be utilized to jointly carry the second cell. In this way, one first cell may assist a greater number of second cells in implementing the random access for the terminal.

For example, the BI field has 4 bits, and one bit of the BI field is combined with the R field to carry the cell indication.

In this case, the remaining 3 bits of the BI field are still configured to indicate the BI value.

FIG. 7D is a schematic diagram of a PDU head where both bits of the R field and one bit of the BI field in the PDU head are configured to carry the cell indication. In this case, the cell indication may carry the index of the second cell.

In some embodiments, the BI field includes a first bit and a second bit, in which the first bit is configured in conjunction with the R field to carry the cell indication, and the second bit indicates the BI index value.

In some embodiments, the BI index value indicates the BI value.

Table 1 below shows a corresponding relationship between BI index values and BI values.

Table 1

| BI index value (Index) | BI value (Backoff Parameter value) , with a unit of milliseconds (ms) |
|---|---|
| 0 | 5 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | 1920 |
| 14 | Reserved |
| 15 | Reserved |

The second bit indicates one of:

the BI index value within a first range;

an even BI index value within a second range; and

an odd BI index value within the second range,

in which the first range is a subset of the second range, and the first range includes continuously distributed BI index values.

In some embodiments, the second range may be 0 to 15 as shown in Table 1. The first range may be any sub-range of the second range, and specifically, any consecutive sub-range of the second range.

For example, the first range may be 0 to 7 as shown in Table 1.

In some embodiments, since a number of second bits is less than a total number of bits contained in the entire BI field, to avoid narrowing a range of indicated BI values, adjacent bit values of the second bits may be mapped to non-consecutive BI index values within the first range.

For example, the 8 bit values of 3 second bits may be mapped to BI index values 0, 2, 4, 6, 8, 16 in Table 1; alternatively, the 8 bit values of 3 second bits may be mapped to BI index values 1, 3, 5, 7, 15 in Table 1. In this way, although a number of indicated BI values is reduced, the range of indicated BI values is not narrowed or is narrowed only slightly.

In some embodiments, one bit value of the second bits indicates two adjacently distributed BI index values within the second range, and the BI value corresponding to the second bit is an average value of BI values indicated by the two adjacently distributed BI index values indicated by the second bit, a rounded-up value of the average value, or a rounded-down value of the average value.

For example, any one of the 8 bit values of 3 second bits may indicate two BI index values. For example, "000" is mapped to BI index values 0 and 1. In this case, the BI value corresponding to BI index value 0 is 5, and the BI value corresponding to BI index value 1 is 10. The average value of 5 and 10 is 7.5, and the specific indicated BI value may be the rounded-up value or the rounded-down value of 7.5. By adopting this method, although the number of indicated BI values is reduced, the range of indicated BI values is not narrowed or is narrowed only slightly.

In some embodiments, the cell indication is carried in the PDU sub-header.

The PDU may include one or more sub-PDUs.

The sub-PDU may include the PDU sub-header.

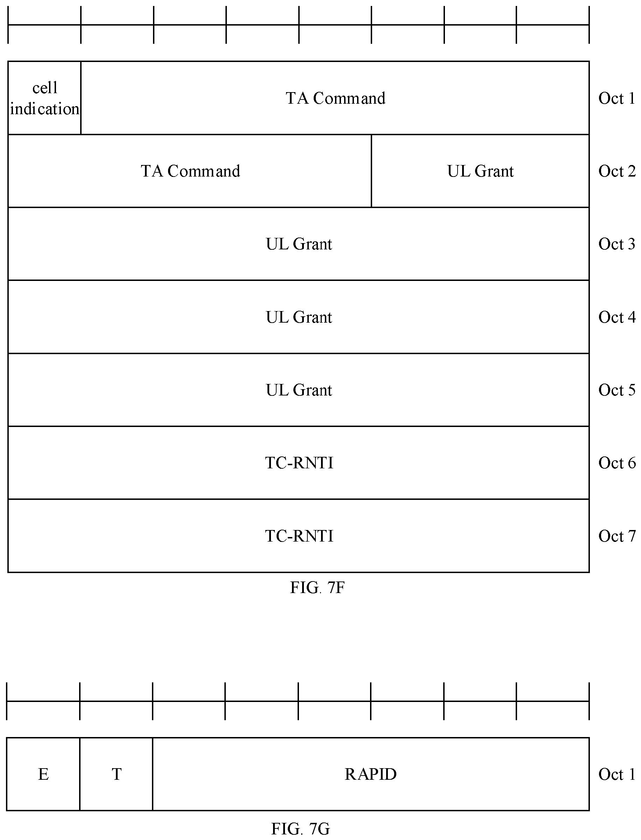

FIG. 7G shows an unextended PDU sub-header, which may include: an E field, a T field, and an RANPID field.

In some embodiments, the PDU sub-header may be a sub-header carrying the RAPID field, and the cell indication may be carried in the RAPID field.

In other embodiments, the PDU sub-header may be an extended PDU sub-header.

A length of the extended PDU sub-header may be extended from 1 Oct to a plurality of Octs. The PDU sub-header shown in FIG. 7E has two Octs, namely Oct 1 and Oct 2. In this case, the cell indication carries the index of the second cell, and the index of the second cell is carried by Oct 2.

In some embodiments, since the PDU sub-header is extended from 1 Oct to 2 Octs, part of the bits are reserved in the PDU sub-header to construct the R field.

In some embodiments, with the introduction of the 2-Oct PDU sub-header, the BI sub-header may be modified to use the R field of the BI sub-header to indicate whether a current PDU contains the 2-Oct PDU sub-header and/or indicate a position of the 2-Oct PDU sub-header.

In some embodiments, the 2-Oct PDU sub-header may be dedicated to the random access of the second cell.

In some embodiments, when one PDU includes both a 1-Oct PDU sub-header and a 2-Oct PDU sub-header, the 1-Oct PDU sub-header is prioritized in ordering, and then the R field of the BI sub-header indicates a start position of the 2-Oct PDU sub-header, thereby facilitating fast decoding by the terminal. For example, the terminal requesting to access the second cell may start decoding the PDU sub-header from a specified position according to the position indicated by the R field of the BI sub-header, thereby improving a decoding rate of the Msg2.

In some embodiments, the cell indication is carried in the PDU sub-header of the Msg2. The MAC PDU includes one or more sub-PDUs, and the PDU sub-header is a header of the sub-PDU.

In some embodiments, the cell indication is carried in an RAR of a MAC sub-PDU of the Msg2.

In some embodiments, FIG. 7F shows a schematic diagram of an RAR.

The RAR shown in FIG. 7F includes 8 Octs, and the cell indication is carried in the first Oct.

In some embodiments, a TA command in FIG. 7F may carry information related to the TA of the terminal in the second cell, and may simultaneously carry one or more UL grants and/or a temporary cell (TC)-RNTI.

In some embodiments, the scrambling sequence of the Msg2 sent by the first cell for the terminal to access the second cell is different from the scrambling sequence of the Msg2 sent by the first cell for the terminal to access the first cell.

In some embodiments, when the Msg3 sent by the first cell adopts different scrambling sequences, the terminal uses corresponding different descrambling sequences to achieve successful descrambling, thereby enabling the terminal to easily identify whether the random access is targeted at the first cell or the second cell.

In some embodiments, the scrambling sequence may be an RA-RNTI.

In some embodiments, the RA-RNTI corresponding to the first cell is different from the RA-RNTI corresponding to the second cell.

In other embodiments, the first cell and the second cell adopt different methods for calculating the RA-RNTI.

In other embodiments, the first cell and the second cell adopt the same method but different parameters for calculating the RA-RNTI.

For example, the RA-RNTI of the first cell and the second cell may be calculated using the following function:

$$RA\text{-}RNTI = 1 + s\_id + 14 \times t\_id + 14 \times 80 \times f\_id + 14 \times 80 \times 8 \times ul\_carrier\ id + 14 \times 80 \times 8 \times 2 \times ssb\_less\_cell\_index$$

A value of 0 for ssb_less_cell_index indicates that the calculated RA-RNTI corresponds to a random access occasion (RO) of the first cell. A value of 1, 2, ..., k for ssb_less_cell_index indicates the index of the second cell configured by the first cell, which is configured via a system broadcast of the first cell.

When the index of the second cell is not explicitly configured, ssb_less_cell_index shall be a sequence index number of a configured SSB/SIB1-less cell list plus 1.

s_id is an ID of the first symbol of the RO.

t_id is an ID of the slot where the RO is located.

ul_carrier_id is an ID of a UL carrier used for the random access.

In some embodiments, the RAR further includes a TA field, and part of the bits of the TA field are also configured to carry the cell indication.

In this case, the remaining bits of the TA field may indicate a TA difference part. A TA difference may be a difference between the TA of the terminal in the second cell and the TA of the terminal in the first cell, or may be a difference between the TA of the terminal in the second cell and an initial TA configured by the first cell via a broadcast message. The initially configured TA may be the TA in the first cell or the TA in the second cell.

For example, the timing information carried in the Msg2 sent by the first cell for the terminal to access the first cell is: the first TA.

The timing information carried in the Msg2 sent by the first cell for the terminal to access the second cell is: the difference between the first TA and the second TA.

The first TA is configured for communication between the terminal and the first cell;

The second TA is configured for communication between the terminal and the second cell.

In some embodiments, the Msg2 may further include a TC-RNTI allocated to the terminal.

The TC-RNTI may be configured for the terminal in a subsequent random access procedure.

Of course, in other embodiments, when the terminal has previously accessed the second cell and initiates access again this time, the Msg2 may not carry the TC-RNTI. In this case, the terminal has obtained the cell- RNTI (C-RNTI) allocated by the second cell via a historical access.

In some embodiments, when the Msg2 for accessing the second cell is sent by the first cell, the TC-RNTI allocated by the first cell to the terminal shall be different from the TC-RNTI and/or C-RNTI for the terminal to access the first cell.

At S2104, a third message is sent.

In some embodiments, the terminal sends the third message to the first cell, where the third message may be Msg3.

In other embodiments, the terminal sends the Msg3 to the second cell.

In some embodiments, the terminal sends the Msg3 according to the UL grant.

For example, when the UL grant is the UL grant of the first cell, the Msg3 is sent to the first cell.

As another example, when the UL grant is the UL grant of the second cell, the Msg3 is sent to the second cell.

In some embodiments, the Msg3 is a scheduled transmission.

In some embodiments, the Msg3 is configured for the terminal to request access to the second cell.

In some embodiments, the Msg3 may carry the TC-RNTI or C-RNTI sent in the Msg2, so as to identify the terminal.

At S2105, a fourth message is sent.

**In** some embodiments, the first cell sends the fourth message, where the fourth message may be Msg4.

In some embodiments, the second cell sends the Msg4.

In other embodiments, after receiving the Msg3, the first cell or the second cell sends the Msg4.

In some embodiments, the Msg4 indicates that the terminal has accessed the second cell.

In some embodiments, the Msg4 may be used by the first cell or the second cell to resolve a conflict caused by the terminal requesting to access the second cell based on contention.

In some embodiments, the Msg4 may be a contention resolution message.

In some embodiments, upon completion of sending the Msg4, the TC-RNTI of the accessed terminal is determined as the C-RNTI, which may be configured to identify the terminal.

As shown in FIG. 3, the embodiment of the disclosure provides an access method, executed by a terminal, including the following steps.

At S3101, first information is received.

In some embodiments, receive the first information of a second cell from a first cell.

For the descriptions of the first cell and the second cell herein, refer to the embodiment shown in FIG. 2.

For the relevant content of the first information herein, refer to the description of step S2102 in the embodiment shown in FIG. 2.

At S3102, an Msg1 is sent.

In some embodiments, the Msg1 is sent to the first cell or the second cell.

For S3102 herein, refer to step S2102 in the embodiment shown in FIG. 2.

At S3103, an Msg2 is received.

In some embodiments, the Msg2 is received from the first cell or the second cell.

For the relevant description of the Msg2 herein, refer to step S2103 in the embodiment shown in FIG. 2.

At S3104, an Msg3 is sent.

In some embodiments, the terminal sends the Msg3 according to the Msg2.

In some embodiments, the terminal sends the Msg3 to the first cell according to the Msg2.

In other embodiments, the terminal sends the Msg3 to the second cell according to the Msg2.

For the relevant description of the Msg3 herein, refer to step S2104 in the embodiment shown in FIG. 2.

At S3105, an Msg4 is received.

In some embodiments, the terminal receives the Msg4 at the first cell.

In other embodiments, the terminal receives the Msg4 at the second cell.

In some embodiments, the terminal may execute step S3101 independently. For example, the terminal receives the first information at the first cell, but may not ultimately initiate the random access procedure to the second cell, so steps S3102 to S3105 are optional steps.

In some embodiments, the terminal may execute steps S3101 to S3102. For example, the terminal receives the first information at the first cell and initiates the random access procedure to the second cell according to the first information, but fails to receive the Msg2 sent by the first cell or the second cell due to access contention failure.

In other embodiments, the terminal may execute steps S3101 to S3105. For example, after receiving the first information at the first cell, the terminal initiates the random access procedure to the second cell according to the first information and obtains a response from a network side, thereby implementing the terminal's access to the second cell.

In other embodiments, the terminal executes S3102 independently. For example, the terminal may obtain the information for accessing the second cell through other means such as protocol agreement, or the terminal has historically accessed the second cell and may omit step S3101 during a re-access procedure to the second cell, and when the terminal does not receive the Msg2 from the network side, the terminal stops the random access procedure and so on.

In other embodiments, the terminal executes steps S3102 to S3105 independently. For example, the terminal may obtain information for accessing the second cell through other means such as protocol agreement, or the terminal has historically accessed the second cell and may omit step S3101 during the re-access procedure to the second cell.

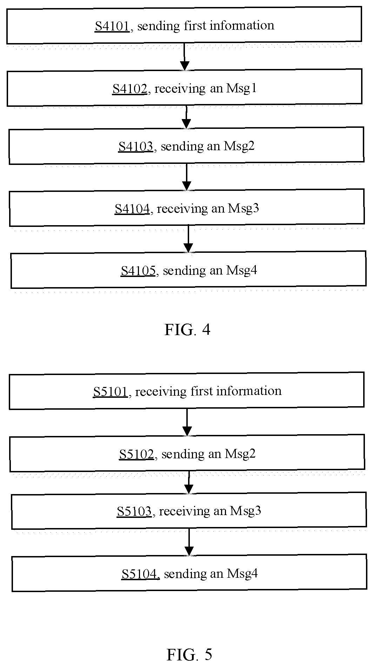

As shown in FIG. 4, the embodiment of the disclosure provides an access method, executed by the access network device of the first cell, including the following steps.

At S4101, first information is sent.

For the relevant content of the first information herein, refer to the description of step S2102 in the embodiment shown in FIG. 2.

At S4102, an Msg1 is received.

In some embodiments, the terminal sends the Msg1 to the first cell or the second cell.

For S4102 herein, refer to step S2102 in the embodiment shown in FIG. 2.

At S4103, an Msg2 is sent.

In some embodiments, the Msg2 may be configured for the terminal to access to the first cell or the second cell.

For the relevant description of the Msg2 herein, refer to step S2103 in the embodiment shown in FIG. 2.

At S4104, an Msg3 is received.

For the relevant description of the Msg3 herein, refer to step S2104 in the embodiment shown in FIG. 2.

At S4105, an Msg4 is sent.

In some embodiments, the terminal receives the Msg4 at the first cell.

In some embodiments, the access network device of the first cell may execute step S4101 independently, that is, steps S4102 to S4105 may all be optional steps. For example, when the terminal does not initiate the random access procedure or directly initiates the random access procedure with the second cell, the access network device of the first cell does not need to execute steps S4102 to S4105.

In some embodiments, the access network device of the first cell may execute steps S4101 to S4102 independently. For example, after receiving the first information, the terminal decides to initiate the random access procedure to the second cell and initiates the random access procedure to the second cell at the first cell, so the first cell receives the Msgl. However, steps S4103 to S4105 may be executed by the second cell, or when the second cell does not allow the terminal to access, steps S4103 to S4105 may also be omitted.

In some embodiments, the access network device of the first cell may execute steps S4101 to S4103 independently. For example, after receiving the first information, the terminal decides to initiate the random access procedure to the second cell and initiates the random access procedure to the second cell at the first cell, so the first cell receives the Msg1. However, steps S4104 to S4105 may be executed by the second cell.

In some embodiments, the access network device of the first cell may execute steps S4101 to S4104 independently. For example, after receiving the first information, the terminal decides to initiate the random access procedure to the second cell and initiates the random access procedure to the second cell at the first cell, so the first cell receives the Msg1. However, step S4105 may be executed by the second cell.

In some embodiments, the access network device of the first cell may execute step S4102 independently, with other steps being optional. For example, the terminal may obtain relevant information for accessing the second cell through other means without receiving the first information, and initiates the random access procedure to the second cell at the first cell, but the network side ultimately determines not to allow the terminal to access the second cell, so subsequent steps may be omitted, or one or more of the subsequent steps S4103 to S4105 may be executed by the second cell.

In some embodiments, the access network device of the first cell may execute step S4103 independently, with other steps being optional. For example, the terminal may obtain relevant information for accessing the second cell through other means without receiving the first information; the first cell sends the Msg2, and one or more of the subsequent steps S4104 to S4105 may be executed by the second cell.

In some embodiments, the access network device of the first cell may execute steps S4103 and S4105 independently, with other steps being optional. For example, the terminal may obtain relevant information for accessing the second cell through other means without receiving the first information; the first cell sends the Msg2, and one or more of the subsequent steps S4101 to S4103 may be executed by the second cell.

In the embodiments of the disclosure, for the descriptions of the first cell and the second cell, refer to the embodiment shown in FIG. 2.

As shown in FIG. 5, the embodiment of the disclosure provides an access method, executed by the access network device of the second cell, including:

At S5101, an Msg1 is received.

For S5101 herein, refer to step S2102 in the embodiment shown in FIG. 2.

In some embodiments, the access network device of the second cell may receive the Msg1 sent by the terminal.

At S5102, an Msg2 is sent.

In some embodiments, the Msg2 may be targeted at the terminal's access to the second cell.

For the relevant description of the Msg2 herein, refer to step S2103 in the embodiment shown in FIG. 2.

At S5103, an Msg3 is received.

For the relevant description of the Msg3 herein, refer to step S2104 in the embodiment shown in FIG. 2.

At S5104, an Msg4 is sent.

In some embodiments, the terminal receives the Msg4 at the first cell.

In some embodiments, the access network device of the second cell may execute steps S5101 to S5104 independently. For example, after receiving the first information sent by the first cell, the terminal initiates the random access procedure to access the second cell at the second cell.

In some embodiments, the access network device of the second cell may execute steps S5101 and S5103 independently, with other steps being optional. For example, steps S5102 and S5104 may be executed by the first cell.

In some embodiments, the access network device of the second cell may execute steps S5102 and S5104 independently, with other steps being optional. For example, steps S5101 and S5103 may be executed by the first cell.

In some embodiments, the access network device of the second cell may execute step S5101 independently, with other steps being optional. For example, the terminal fails to contend for an authorization to access the second cell, so subsequent steps may not be executed any longer, or may be performed by the first cell instead.

In the embodiments of the disclosure, for the descriptions of the first cell and the second cell, refer to the embodiment shown in FIG. 2.

The embodiments of the disclosure provide a random access procedure for an SSB/SIB1-less cell, enabling the SSB/SIB1-less cell to support the terminal access and provide services to the terminal, thereby reducing the power consumption cost in the network operation costs of operators. A capability of the SSB/SIB1-less cell to support the terminal access as mentioned herein may at least include that the SSB/SIB1-less cell may support the initial access of the terminal.

Meanwhile, a deployment of the SSB/SIB1-less cell makes network deployment more flexible. Since the SSB/SIB1-less cell does not change network coverage and only provide data services to expand system capacity, the SSB/SIB1-less cell may realize rapid deployment, quick commissioning, flexible deployment and on-demand activation, i.e., "plug-and-play", which improves a flexibility and timeliness of network deployment.

In some embodiments, the SSB/SIB1-less cell may serve as a secondary cell (SCell).

As shown in FIG. 8A and/or FIG. 8B, the embodiments of the disclosure provide several methods for accessing an SSB/SIB1-less cell. In FIGS. 8A and 8B, Msg1 may refer to the aforementioned first message, Msg2 refers to the aforementioned second message, Msg3 refers to the aforementioned third message, and Msg4 refers to the aforementioned fourth message.

Scheme 1: Initial access to an SSB/SIB1-less SCell - evaluating whether the random access procedure may be initiated, and selecting a random access preamble and a RO.

A cell in normal operation status broadcasts and configures relevant configuration information of the SSB/SIB-less cell.

The SSB/SIB-less cell and the cell in normal operation status have overlapping coverage or adjacent coverage, i.e., the SSB/SIB-less cell and the cell in normal operation status are in a neighboring cell relationship.

Relevant configuration information of the SSB/SIB-less cell may be configured in SIB1 of the normally operating cell or a newly defined SIB.

The relevant configuration information may be one type of the aforementioned first information.

The currently normally operating cell herein may be the aforementioned first cell.

The relevant configuration information of the SSB/SIB-less cell includes at least one of the following:

an index of the SSB/SIB-less cell, which is a positive integer starting from 1, where the currently normally operating cell configures at least one SSB/SIB-less cell;

identity information of the SSB/SIB-less cell, such as at least one of: PCI, a cell ID, an RNAC, or a TAC, etc;

a beam transmission mode of the SSB/SIB-less cell, such as a period, a maximum number of beams, and transmitted beam directions, etc., where this configuration is not only applicable to SSB and/or SIB1;

frequency point information of the SSB/SIB-less cell, such as a frequency layer, a frequency point of the SSB, a frequency point of a UL WUS, etc.;

a list of network slices supported by the SSB/SIB-less cell;

public configuration information of the SSB/SIB-less cell, such as RACH-related configuration information, for example, a corresponding relationship between an RACH and/or a preamble and the SSB of the normally operating cell, or the corresponding relationship between the RACH and/or the preamble and a beam of the SSB/SIB-less cell specially configured by the normally operating cell;

a condition or threshold configuration information for initiating an RACH procedure to the SSB/SIB-less cell;

all or part of the configuration information of SSB and/or SIB1 of the SSB/SIB-less cell.

a DL timing offset between the SSB/SIB-less cell and the currently normally operating cell;

a DL signal set, which indicates the coverage range of the SSB/SIB-less cell, includes a CSI-RS set, an SSB set, or a set containing CSI-RS and SSB, and configured for the UE to evaluate whether the UE is close to a sleeping cell or already within the coverage range of the SSB/SIB-less cell; or

condition configuration information for evaluating whether the UE is close to the SSB/SIB-less cell or already within the coverage range of the SSB/SIB-less cell, for example, whether a measured target signal is greater than or less than a threshold configured by the network side, which may be configured according to per beam or according to a beam group.

This beam may be a transmission beam for the CSI-RS or the SSB.

In some embodiments, the measurement quantity is RSRP, RSRQ or SINR, depending on a configuration of the network side.

The threshold configuration may be per CSI-RS, per CSI-RS group, per SSB index, per SSB index group, or per CSI-RS and SSB index group.

The measurement value used for evaluation may be per beam, i.e., per CSI-RS or per SSB.

It may be a linear average value based on at least one beam, such as a group of CSI-RS or a group of SSB.

The terminal camps on the normally operating cell and obtains relevant configuration information about nearby SSB/SIB1-less cells therefrom, then measures the SSB or beam configured above that is related to the coverage of the SSB/SIB1-less cell or RACH resource selection. If an initial access procedure is to be initiated, the terminal judges whether it can access the SSB/SIB1-less cell based on the above measurement results, and selects the random access preamble and/or RACH corresponding to that beam.

Scheme 2: Initial access to an SSB/SIB1-less cell - Msg1/3 transmission and Msg2/4 reception

The terminal decides to initiate a random access procedure to the SSB/SIB1-less cell, sets the initial transmission power for sending Msg1, and transmits the selected preamble on the selected RO.

The terminal receives Msg2, i.e., the RAR, in a normally operating cell or a cell that configures the SSB/SIB1-less cell. The purpose is to distinguish between the RAR for random access oriented to the SSB/SIB1-less cell and the RAR for the random access procedure of the current normally operating cell.

Option 1: Calculate using different RA-RNTI values. When a normally operating cell configures at least one SSB/SIB1-less cell, each SSB/SIB1-less cell is associated with an index (e.g., an integer starting from 1), and the SSB/SIB1-less cell index is unique within the normally operating cell. When calculating the RA-RNTI, the index of the SSB/SIB1-less cell is considered in the formula. For example:

$$RA\text{-}RNTI = 1 + s\_id + 14 \times t\_id + 14 \times 80 \times f\_id + 14 \times 80 \times 8 \times ul\_carrier\_id + 14 \times 80 \times 8 \times 2 \times ssb\_less\_cell\_index$$

A value of 0 for ssb_less_cell_index indicates that the calculated RA-RNTI corresponds to the random access RO resource of the current normally operating cell. Values of 1, 2, ..., k for ssb_less_cell_index indicate the indices of the SSB/SIB1-less cells configured by the current normally operating cell, which are configured through a system broadcast of the normally operating cell. If the index of the SSB/SIB1-less cell is not explicitly configured, ssb_less_cell_index is a sequence index number of the configured SSB/SIB1-less cell list plus 1.

Option 2.1: Use one of the two R bits in the header of the RAR MAC PDU to indicate the RAR of the SSB/SIB1-less cell.

Option 2.2: Use the two R bits in the header of the RAR MAC PDU to indicate the RARs of up to 3 SSB/SIB1-less cells. Among these two bits, 10, 10, and 11 correspond to the indices of the SSB/SIB1-less cells respectively, indicating which SSB/SIB1-less cell the RAR corresponds to.

Option 2.3: To support a larger number of SSB/SIB1-less cells, use one bit of the R bits and one bit of the BI in the header of the RAR MAC PDU, i.e., compress the bit field included in the BI domain. For example, compress the number of bits carrying the BI index value in the BI domain to 3 bits.

For example, 3 bits indicating the BI value can be defined as follows:

Option a: Values 0 to 7 correspond to the BI values of indices 0 to 7 in the BI table respectively;

Option b: Specified by the system broadcast of the normally operating cell or fixed by the system, each value of this modified BI (i.e., 3-bit BI) corresponds to an odd index in the table respectively. For example, BI values 0 to 7 correspond to the BI values of indices 1, 3, 5, 7, 9, 11, 13, and 15 in the BI table respectively;

Option c: Specified by the system broadcast of the normally operating cell or fixed by the system, each value of this modified BI (i.e., 3-bit BI) corresponds to an even index in the table respectively. For example, BI values 0 to 7 correspond to the BI values of indices 0, 2, 4, 6, 8, 10, 12, and 14 in the BI table respectively;

Option d: Each value of this modified BI (i.e., 3-bit BI) corresponds to a BI value, which is a floor or ceiling of an average of two indices 2n and 2n+1 in the BI table.

Option 2.4: Use the subheader of each RAR in the RAR MAC PDU to indicate the SSB/SIB1-less index, representing which SSB/SIB1-less cell the RAR belongs to.

Option 2.5: Use the R bit in each RAR of the RAR MAC PDU to indicate the RAR of the SSB/SIB1-less cell.

Option 2.6: Use part of the bits in the TA and/or the R bit in each RAR of the RAR MAC PDU to indicate the SSB/SIB1-less cell index. The remaining bits of the TA indicate a delta TA part, and the initial TA is configured through the system broadcast of the normally operating cell.

Msg3 is sent based on the UL grant provided in the received corresponding RAR. A retransmission scheduling of Msg3 may be performed in the normally operating cell or in the SSB/SIB1-less cell.

If the scheduling is performed in the normally operating cell, it depends on a direct negotiation between the normally operating cell and the SSB/SIB1-less cell to ensure that the C-RNTI allocated by the SSB/SIB1-less cell in the RAR does not conflict with the C-RNTIs allocated by the normally operating cell to other UEs.

Msg4 is received in the normally operating cell or in the SSB/SIB1-less cell. If Msg4 is received in the normally operating cell, it depends on the direct negotiation between the normally operating cell and the SSB/SIB1-less cell to ensure that the C-RNTI allocated by the SSB/SIB1-less cell in the RAR does not conflict with the C-RNTIs allocated by the normally operating cell to other UEs.

The embodiments of the disclosure support the deployment of SSB/SIB1-less cells and the procedure for initiating access to SSB/SIB1-less cells. SSB/SIB1-less cells can achieve rapid deployment, quick commissioning, flexible deployment and on-demand activation, i.e., "plug-and-play", which improves the flexibility and timeliness of network deployment.

The disclosure supports the deployment of SSB/SIB1-less cells and the procedure for initiating initial access to the SSB/SIB1-less cell.

The embodiments of the disclosure further provide an apparatus for implementing any of the foregoing methods.

For example, an apparatus is provided, where the apparatus includes units or modules configured to implement each step performed by a terminal in any of the foregoing methods. For another example, another apparatus is provided, including units or modules configured to implement each step performed by the network device (e.g., the access network device, or the core network device, etc.) in any of the foregoing methods.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

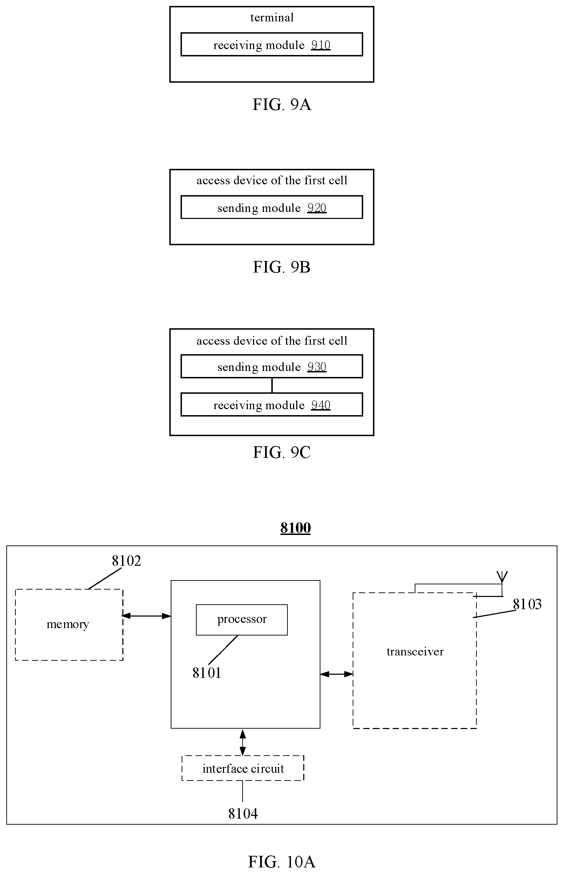

FIG. 9A is a schematic diagram of a terminal provided by an embodiment of the disclosure. As shown in FIG. 9A, the terminal provided by an embodiment of the disclosure includes: a receiving module 910 configured to receive first information of a second cell from a first cell, in which the first cell is a neighboring cell of the second cell; the first information is configured for the terminal to access the second cell; and the second cell does not transmit at least one of:

an SSB;
an SIB; or
a paging message.

In some embodiments, the receiving module 910 may be configured to execute the steps related to information reception performed by the terminal in any of the above access methods, which is not be repeated here.
In some embodiments, the terminal may further include a sending module configured to execute the steps related to information transmission performed by the terminal in any of the above access methods, which is not be repeated here.
In some embodiments, the terminal further includes one or more processing modules, which may be configured for performing an information processing.
FIG. 9B is a schematic diagram of an access network device provided by an embodiment of the disclosure. As shown in FIG. 9B, the access network device of the first cell provided by an embodiment of the disclosure includes: a sending module 920 configured to transmit first information in the first cell or the second cell, where the first information is configured for the terminal to access the second cell; the second cell does not transmit at least one of:

an SSB;
an SIB; or
a paging message.

In some embodiments, the sending module 920 is configured to execute the steps related to information transmission performed by the access network device in any of the above access methods, which is not be repeated here.

The access network device may further include a receiving module, which may be configured to perform the steps related to information reception in any of the aforementioned access methods implemented by the access network device, and details are not repeated here.

In some embodiments, the access network device further includes one or more processing modules, which may be configured for performing an information processing.

FIG. 9C is a schematic diagram of an access network device of a second cell provided by an embodiment of the disclosure. As shown in FIG. 9C, the access network device of the second cell provided by an embodiment of the disclosure includes: a sending module 930 and/or a receiving module 940. The sending module 930 may be configured to perform the transmission-related steps provided in any embodiment of the aforementioned access methods implemented by the second cell. The receiving module 940 may be configured to perform the reception-related steps provided in any embodiment of the aforementioned access methods implemented by the second cell.

In some embodiments, the access network device further includes one or more processing modules, which may be configured for performing an information processing.

FIG. 10A is a schematic diagram of a communication device 8100 provided by an embodiment of the disclosure. The communication device 8100 may be a terminal and a network device (e.g., an access network device or a core network device, etc.), or a terminal (e.g., a user equipment (UE), etc.). It may also be a chip, a chip system, or a processor that supports the network device to implement any of the aforementioned methods, or a chip, a chip system, or a processor that supports the terminal to implement any of the aforementioned access methods. The communication device 8100 may be configured to implement the access methods described in the foregoing method embodiments; for details, refer to the descriptions in the foregoing method embodiments.

As shown in FIG. 10A, the communication device 8100 includes one or more processors 8101. The processor 8101 may be a general-purpose processor, a special-purpose processor, or the like, for example, a baseband processor or a central processor. The baseband processor may be configured to process communication protocols and communication data, while the central processor may be configured to control the communication apparatus (e.g., base station, baseband chip, terminal device, terminal device chip, DU or CU, etc.), execute programs, and process program data. The processor 8101 is configured to invoke instructions to cause the communication device 8100 to execute any of the aforementioned access methods.

In some embodiments, the communication device 8100 further includes one or more memories 8102 for storing instructions. In some embodiments, all or part of the memory 8102 may also be located outside the communication device 8100.

In some embodiments, the communication device 8100 further includes one or more transceivers 8103. When the communication device 8100 includes one or more transceivers 8103, the communication steps such as transmission and reception in the aforementioned methods are performed by the transceivers 8103, and other steps are performed by the processor 8101.

In some embodiments, the transceiver may include a receiver and a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

In some embodiments, the communication device 8100 further includes one or more interface circuits 8104. In some embodiments, the one or more interface circuits 8104 are connected to the memory 8102. The interface circuit 8104 may be configured to receive signals from the memory 8102 or other apparatuses, and may be configured to send signals to the memory 8102 or other apparatuses. For example, the interface circuit 8104 may read instructions stored in the memory 8102 and send the instructions to the processor 8101.

The communication device 8100 described in the above embodiments may be the network device or the terminal, but the scope of the communication device 8100 described in the disclosure is not limited thereto, and the structure of the communication device 8100 may not be limited by FIG. 10A. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

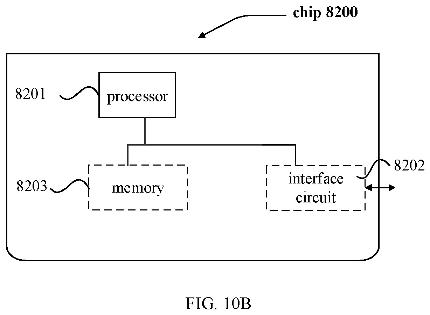

FIG. 10B is a schematic diagram of a chip 8200 proposed in an embodiment of the disclosure. When the communication device 8100 is a chip or a chip system, reference may be made to the schematic diagram of the chip 8200 shown in FIG. 10B, but it is not limited thereto.

The chip 8200 includes one or more processors 8201, and the chip 8200 is configured to invoke instructions to cause the chip 8200 to execute any of the aforementioned access methods.

In some embodiments, the chip 8200 further includes one or more interface circuits 8202, where the interface circuit 8202 is connected to the memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201. In some embodiments, the terms interface circuit, interface, transceiver pin, transceiver and the like may be used interchangeably.

In some embodiments, the chip 8200 further includes one or more memories 8203 for storing instructions. In some embodiments, all or part of the memory 8203 may be located outside the chip 8200.

The disclosure also provides a storage medium having instructions stored thereon, where when the aforementioned instructions are executed on the communication device 8100, the communication device 8100 is caused to perform any of the aforementioned methods. In some embodiments, the aforementioned storage medium is an electronic storage medium. In some embodiments, the aforementioned storage medium is a computer-readable storage medium, but may also be a storage medium readable by other devices. In some embodiments, the aforementioned storage medium may be a non-transitory storage medium, but may also be a transitory storage medium.

The disclosure also provides a program product, where when the aforementioned program product is executed by the communication device 8100, the communication device 8100 is caused to perform any of the aforementioned access methods. In some embodiments, the aforementioned program product is a computer program product.

The disclosure also provides a computer program which, when running on a computer, causes the computer to perform any of the aforementioned access methods.

After considering the specification and practicing the invention disclosed herein, those skilled in the art will readily conceive of other embodiments of the disclosure. The disclosure is intended to cover any variations, uses, or adaptations of the embodiments of the disclosure, which follow the general principles of the embodiments of the disclosure and include common general knowledge or conventional technical means in the technical field not disclosed by the disclosure. The specification and the embodiments are regarded as merely exemplary, and the true scope and spirit of the embodiments of the disclosure are indicated by the following claims.

It should be understood that the embodiments of the disclosure are not limited to the precise structures described above and illustrated in the accompanying drawings, and various modifications and changes may be made without departing from their scope. The scope of the embodiments of the disclosure is limited only by the appended claims.

**Claims**

1.  An access method, comprising:

    receiving, by a terminal, first information of a second cell from a first cell, wherein a coverage of the second cell overlaps with a coverage of the first cell, or a coverage of the second cell is adjacent to a coverage of the first cell; the first information is configured for the terminal to access the second cell; and the second cell is in a dormant state, or the second cell does not transmit at least one of:

    a synchronization signal block (SSB);
    a system information block (SIB); or
    a paging message.

2.  The access method according to claim 1, wherein the second cell does not transmit the SSB, the SIB or the paging message.

3.  The access method according to claim 1 or 2, wherein the first cell transmits at least one of:

    the SSB;
    the SIB; or
    the paging message.

4.  The access method according to any one of claims 1 to 3, wherein the first information comprises at least one of:

    an index of the second cell;
    a cell identifier (ID) of the second cell;
    beam information of the second cell, indicating whether the second cell adopts beam-based communication and/or indicating a beam configuration of beam-based communication of the second cell;

frequency point information, indicating a carrier frequency used by the second cell;

slice information, indicating whether the second cell supports a network slice and/or an ID of a supported network slice;

an access configuration, configured for the terminal to determine whether to access the second cell;

coverage information of the second cell;

reference information, configured for the terminal to determine whether the terminal is capable of accessing the second cell;

signal information, indicating a reference signal associated with the second cell; or

timing information, indicating an association relationship between a downlink timing of the first cell and a downlink timing of the second cell.

5. The access method according to claim 1 or 2, further comprising:
in a case of satisfying a condition for accessing the second cell, sending a first message (Msg1) to the first cell or the second cell, wherein the Msg1 is configured to request an uplink scheduling.

6. The access method according to claim 5, further comprising:
receiving, by the terminal, a second message (Msg2) from the first cell or the second cell, wherein the Msg2 is a random access response (RAR) carrying an uplink grant.

7. The access method according to claim 6, wherein

an information content of the Msg2 sent by the first cell for the terminal to access the second cell is different from an information content of the Msg2 sent by the first cell for the terminal to access the first cell;

or

a scrambling sequence of the Msg2 sent by the first cell for the terminal to access the second cell is different from a scrambling sequence of the Msg2 sent by the first cell for the terminal to access the first cell.

8. The access method according to claim 7, wherein

the scrambling sequence of the Msg2 for the terminal to access the second cell comprises a radio access-radio network temporary identifier (RA-RNTI) associated with the second cell; and/or

the scrambling sequence of the Msg2 for the terminal to access the first cell comprises an RA-RNTI associated with the first cell.

9. The access method according to claim 8, wherein the RA-RNTI associated with the second cell is determined according to a cell ID of the second cell.

10. The access method according to claim 7, wherein a different information content between the Msg2 sent by the first cell for the terminal to access the second cell and the Msg2 sent by the first cell for the terminal to access the first cell comprises one of:

a cell indication; and

timing information.

11. The access method according to claim 10, wherein the cell indication is carried in at least one of:

a header of a medium access control (MAC) protocol data unit (PDU) of the Msg2;

a PDU sub-header of the Msg2, wherein the MAC PDU comprises a sub-PDU, and the PDU sub-header is a header of the sub-PDU; or

an RAR of a MAC sub-PDU of the Msg2.

12. The access method according to claim 10, wherein

the cell indication is carried in a reserved R field of a PDU header of the Msg2;

or

the cell indication is carried in an R field and a backoff indicator (BI) field of a PDU header of the Msg2.

13. The access method according to claim 12, wherein the BI field comprises a first bit and a second bit, the first bit and the R field are configured to carry the cell indication, and the second bit indicates a BI index value.

14. The access method according to claim 13, wherein the second bit indicates one of:

the BI index value within a first range;
an even BI index value within a second range; and
an odd BI index value within the second range,
wherein the first range is a subset of the second range, and the first range comprises continuously distributed BI index values.

15. The access method according to claim 13, wherein one bit value of the second bit indicates two adjacently distributed BI index values within a second range, and a BI value corresponding to the second bit is: an average value of BI values indicated by the two adjacently distributed BI index values indicated by the second bit, a rounded-up value of the average value, or a rounded-down value of the average value.

16. The access method according to claim 10, wherein

the timing information carried in the Msg2 sent by the first cell for the terminal to access the first cell indicates a first timing advance (TA); and
the timing information carried in the Msg2 sent by the first cell for the terminal to access the second cell indicates a difference value between the first TA and a second TA,
wherein the first TA is configured for communication between the terminal and the first cell, and the second TA is configured for communication between the terminal and the second cell.

17. The access method according to any one of claims 6 to 14, further comprising:
sending, by the terminal, a third message (Msg3) to the first cell or the second cell, wherein the Msg3 is configured for the terminal to request to access the second cell.

18. The access method according to claim 17, further comprising:
receiving, by the terminal, a fourth message (Msg4) sent by the first cell or the second cell, wherein the Msg4 is configured for the terminal to confirm that the terminal has accessed to the second cell.

19. An access method, comprising:
sending first information by an access network device of a first cell or a second cell, wherein the first information is configured for a terminal to access the second cell; a coverage of the second cell overlaps with a coverage of the first cell, or a coverage of the second cell is adjacent to a coverage of the first cell; and the second cell is in a dormant state, or the second cell does not transmit at least one of:

a synchronization signal block (SSB);
a system information block (SIB); or
a paging message.

20. The access method according to claim 19, wherein the first information comprises at least one of:

an index of the second cell;
a cell identifier (ID) of the second cell;
beam information of the second cell, indicating whether the second cell adopts beam-based communication and/or indicating a beam configuration of beam-based communication of the second cell;
frequency point information, indicating a carrier frequency used by the second cell;
slice information, indicating whether the second cell supports a network slice and/or an ID of a supported network slice;
an access configuration, configured for the terminal to determine whether to access the second cell;
coverage information of the second cell;
reference information, configured for the terminal to determine whether the terminal is capable of accessing the second cell;
signal information, indicating a reference signal associated with the second cell; or
timing information, indicating an association relationship between a downlink timing of the first cell and a downlink timing of the second cell.

21. The access method according to claim 19 or 20, further comprising:
    receiving a first message (Msg1), wherein the Msg1 is configured to request an uplink scheduling of the second cell in a case where a condition for accessing the second cell is satisfied.

22. The access method according to claim 20, further comprising:
    transmitting a second message (Msg2) in the first cell or the second cell, wherein the Msg2 is a random access response (RAR) carrying an uplink grant.

23. The access method according to claim 22, wherein:

    an information content of the Msg2 sent by the first cell for the terminal to access the second cell is different from an information content of the Msg2 sent by the first cell for the terminal to access the first cell;
    or
    a scrambling sequence of the Msg2 sent by the first cell for the terminal to access the second cell is different from a scrambling sequence of the Msg2 sent by the first cell for the terminal to access the first cell.

24. The access method according to claim 23, wherein

    the scrambling sequence of the Msg2 for the terminal to access the second cell comprises a radio access-radio network temporary identifier (RA-RNTI) associated with the second cell; and/or
    the scrambling sequence of the Msg2 for the terminal to access the first cell comprises an RA-RNTI associated with the first cell.

25. The access method according to claim 24, wherein the RA-RNTI associated with the second cell is determined according to a cell ID of the second cell.

26. The access method according to claim 23, wherein a different information content between the Msg2 sent by the first cell for the terminal to access the second cell and the Msg2 sent by the first cell for the terminal to access the first cell comprises one of:

    a cell indication; and
    timing information.

27. The access method according to claim 26, wherein the cell indication is carried in at least one of:

    a header of a medium access control (MAC) protocol data unit (PDU) of the Msg2;
    a PDU sub-header of the Msg2, wherein the MAC PDU comprises a sub-PDU, and the PDU sub-header is a header of the sub-PDU; or
    an RAR of a MAC sub-PDU of the Msg2.

28. The access method according to claim 25, wherein

    the cell indication is carried in a reserved R field of a PDU header of the Msg2;
    or
    the cell indication is carried in an R field and a backoff indicator (BI) field of a PDU header of the Msg2.

29. The access method according to claim 28, wherein the BI field comprises a first bit and a second bit, the first bit and the R field are configured to carry the cell indication, and the second bit indicates a BI index value.

30. The access method according to claim 29, wherein the second bit indicates one of:

    the BI index value within a first range;
    an even BI index value within a second range; and
    an odd BI index value within the second range,
    wherein the first range is a subset of the second range, and the first range comprises continuously distributed BI index values.

31. The access method according to claim 29, wherein one bit value of the second bit indicates two adjacently distributed BI index values within a second range, and a BI value corresponding to the second bit is: an average value of BI values indicated by the two adjacently distributed BI index values indicated by the second bit, a rounded-up value of the average value, or a rounded-down value of the average value.

32. The access method according to claim 26, wherein

the timing information carried in the Msg2 sent by the first cell for the terminal to access the first cell indicates a first timing advance (TA); and
the timing information carried in the Msg2 sent by the first cell for the terminal to access the second cell indicates a difference value between the first TA and a second TA,
wherein the first TA is configured for communication between the terminal and the first cell, and the second TA is configured for communication between the terminal and the second cell.

33. The access method according to any one of claims 22 to 32, further comprising:
receiving a third message (Msg3), wherein the Msg3 is configured for the terminal to request to access the second cell.

34. The access method according to claim 33, further comprising:
the terminal receiving a fourth message (Msg4) sent by the first cell or the second cell, wherein the Msg4 is configured for the terminal to confirm that the terminal has accessed to the second cell.

35. A terminal, comprising:
a receiving module configured to receive first information of a second cell from a first cell, wherein a coverage of the second cell overlaps with a coverage of the first cell, or a coverage of the second cell is adjacent to a coverage of the first cell; the first information is configured for the terminal to access the second cell; and the second cell does not transmit at least one of:

a synchronization signal block (SSB);
a system information block (SIB); or
a paging message.

36. An access network device, comprising:
a sending module configured to transmit first information in a first cell or a second cell, wherein the first information is configured for a terminal to access the second cell; and the second cell is in a dormant state, or the second cell does not transmit at least one of:

a synchronization signal block (SSB);
a system information block (SIB); or
a paging message,
wherein a coverage of the second cell overlaps with a coverage of the first cell, or a coverage of the second cell is adjacent to a coverage of the first cell.

37. A communication device, comprising:

one or more processors;
wherein the one or more processors are configured to invoke instructions to cause the communication device to perform the access method according to any one of claims 1 to 18 or claims 19 to 34.

38. A storage medium, wherein the storage medium stores instructions that, when run on a communication device, cause the communication device to perform the access method according to any one of claims 1 to 16 or claims 17 to 25.

FIG. 1A

FIG. 1B

terminal | first cell | first cell/second cell

S2101, sending first information

S2102, sending a first message

S2103, sending a second message

S2104, sending a third message

S2105, sending a fourth message

FIG. 2

S3101, receiving first information

↓

S3102, sending an Msg1

↓

S3103, receiving an Msg2

↓

S3104, sending an Msg3

↓

S3105, receiving an Msg4

FIG. 3

S4101, sending first information

S4102, receiving an Msg1

S4103, sending an Msg2

S4104, receiving an Msg3

S4105, sending an Msg4

FIG. 4

S5101, receiving first information

S5102, sending an Msg2

S5103, receiving an Msg3

S5104, sending an Msg4

FIG. 5

UE                              gNB

MSG1 ───Random Access Preamble───▶

◀───Random Access Response─── MSG2

MSG3 ───Scheduled Transmission───▶

◀───Contention Resolution─── MSG4

FIG. 6A

UE                              gNB

MSG0 ◀───RA Preamble assignment───

───Random Access Preamble───▶ MSGA

MSGB ◀───Random Access Response───

FIG. 6B

| E | T | R | R | BI | Oct 1 |
|---|---|---|---|----|-------|

FIG. 7A

| E | T | cell indication | R | BI | | Oct 1 |

FIG. 7B

| E | T | index of the second cell | BI | | Oct 1 |

FIG. 7C

| E | T | index of the second cell | BI | Oct 1 |

FIG. 7D

| E | T | RAPID | Oct 1 |
| R | R | index of the second cell | Oct 2 |

FIG. 7E

| cell indication | TA Command | | Oct 1 |
|---|---|---|---|
| TA Command | | UL Grant | Oct 2 |
| UL Grant | | | Oct 3 |
| UL Grant | | | Oct 4 |
| UL Grant | | | Oct 5 |
| TC-RNTI | | | Oct 6 |
| TC-RNTI | | | Oct 7 |

FIG. 7F

| E | T | RAPID | Oct 1 |
|---|---|---|---|

FIG. 7G

| E/T/R/R/BI sub-header | E/T/RAPID sub-header | E/T/RAPID sub-header | MAC RAR | | |
|---|---|---|---|---|---|

| MAC sub-PDU 1 (BI only) | MAC sub-PDU 2 (RAPID only) | MAC sub-PDU 3 (RAPID and RAR) | MAC 子-PDU 4 | ... | MAC sub-PDU n | Padding |
|---|---|---|---|---|---|---|

FIG. 7H

FIG. 8A

FIG. 8B

terminal

receiving module 910

FIG. 9A

access device of the first cell

sending module 920

FIG. 9B

access device of the first cell

sending module 930

receiving module 940

FIG. 9C

8100

8102

memory

processor

8101

transceiver

8103

interface circuit

8104

FIG. 10A

chip 8200

8201    processor

8203    memory         interface circuit    8202

FIG. 10B

## INTERNATIONAL SEARCH REPORT

| International application No. |
| --- |
| **PCT/CN2023/109431** |

### A. CLASSIFICATION OF SUBJECT MATTER

H04W 48/08(2009.01)i

According to International Patent Classification (IPC) or to both national classification and IPC

### B. FIELDS SEARCHED

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXTC, 3GPP, CJFD, IEEE: 休眠, dorman+, 小区, cell?, 接入, access+, 唤醒, wake up, 覆盖, cover+, 重叠, overlap +, 邻, neighbor+

### C. DOCUMENTS CONSIDERED TO BE RELEVANT

| Category* | Citation of document, with indication, where appropriate, of the relevant passages | Relevant to claim No. |
| --- | --- | --- |
| X | CN 115843018 A (HUAWEI TECHNOLOGIES CO., LTD.) 24 March 2023 (2023-03-24) claims 1-30, and description, paragraphs 156-330 | 1-38 |
| A | CN 116264728 A (HUAWEI TECHNOLOGIES CO., LTD.) 16 June 2023 (2023-06-16) entire document | 1-38 |
| A | CN 103874231 A (CHINA ACADEMY OF TELECOMMUNICATIONS TECHNOLOGY) 18 June 2014 (2014-06-18) entire document | 1-38 |
| A | US 2022330156 A1 (OFINNO, LLC) 13 October 2022 (2022-10-13) entire document | 1-38 |
| A | WO 2022235520 A1 (QUALCOMM INC.) 10 November 2022 (2022-11-10) entire document | 1-38 |
| A | ERICSSON. "Discussion on Backwards Compatibility When Changing Cell Coverage" *3GPP TSG-RAN WG3#81-Bis, R3-131782*, 11 October 2013 (2013-10-11), entire document | 1-38 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 August 2023** | **06 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109431**

| Patent document cited in search report | | | Publication date (day/month/year) | Patent family member(s) | | | Publication date (day/month/year) |
|---|---|---|---|---|---|---|---|
| CN | 115843018 | A | 24 March 2023 | WO | 2023030124 | A1 | 09 March 2023 |
| CN | 116264728 | A | 16 June 2023 | WO | 2023109861 | A1 | 22 June 2023 |
| CN | 103874231 | A | 18 June 2014 | WO | 2014094591 | A1 | 26 June 2014 |
| US | 2022330156 | A1 | 13 October 2022 | EP | 4082255 | A1 | 02 November 2022 |
| | | | | WO | 2021133705 | A1 | 01 July 2021 |
| | | | | CN | 115299116 | A | 04 November 2022 |
| WO | 2022235520 | A1 | 10 November 2022 | US | 2022361107 | A1 | 10 November 2022 |

Form PCT/ISA/210 (patent family annex) (July 2022)